(19) Europäisches Patentamt
European Patent Office
Office européen des brevets

(11) EP 2 668 223 B1

(12) **FASCICULE DE BREVET EUROPEEN**

(45) Date de publication et mention de la délivrance du brevet:
**14.06.2017 Bulletin 2017/24**

(21) Numéro de dépôt: **12700507.2**

(22) Date de dépôt: **23.01.2012**

(51) Int Cl.:
***C08G 59/42*** *(2006.01)* ***C08L 63/02*** *(2006.01)*
***C08L 63/04*** *(2006.01)* ***B29B 17/04*** *(2006.01)*

(86) Numéro de dépôt international:
**PCT/EP2012/050939**

(87) Numéro de publication internationale:
**WO 2012/101078 (02.08.2012 Gazette 2012/31)**

# (54) RESINES ET COMPOSITES THERMODURS EPOXY ANHYDRIDES POUVANT ETRE FACONNES A CHAUD ET RECYCLES

HEISSFORMBARE UND WIEDERAUFBEREITBARE WÄRMEHÄRTENDE ANHYDRID-EPOXID-HARZE UND WÄRMEHÄRTENDE VERBUNDSTOFFE

HOT-FORMABLE AND RECYCLABLE EPOXY ANHYDRIDE THERMOSETTING RESINS AND THERMOSETTING COMPOSITES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.01.2011 FR 1150546**

(43) Date de publication de la demande:
**04.12.2013 Bulletin 2013/49**

(73) Titulaires:
- **Centre National de la Recherche Scientifique (C.N.R.S.)
75794 Paris Cedex 16 (FR)**
- **Arkema France
92700 Colombes (FR)**

(72) Inventeurs:
- **LEIBLER, Ludwik
F-75006 Paris (FR)**
- **TOURNILHAC, François
F-75012 Paris (FR)**
- **MONTARNAL, Damien
F-38300 Bourgoin-Jallieu (FR)**
- **CAPELOT, Mathieu
F-75013 Paris (FR)**

(74) Mandataire: **Lhoste, Catherine
Arkema France
Département Propriété Industrielle
420, rue d'Estienne d'Orves
F-92705 Colombes Cedex (FR)**

(56) Documents cités:
**US-A- 3 624 032** **US-A- 3 932 343**
**US-A- 4 131 715**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### Domaine de l'invention

L'invention a pour objet des résines et des composites thermodurs les comprenant, ces matériaux pouvant être façonnés à chaud. Elle a également pour objet un procédé de fabrication de ces matériaux, un procédé de transformation et un procédé de recyclage de ces matériaux. Elle concerne également de nouvelles formes solides de résines et de composites thermodurcis qui peuvent être utilisées dans la mise en oeuvre de ces procédés.

Par définition, une résine thermodurcissable est une résine qui durcit sous l'action d'une énergie, en particulier sous l'action de la chaleur. Les thermodurs qui sont les matériaux polymères fabriqués à partir de résines thermodurcissables ont l'avantage de présenter une résistance mécanique, thermique et chimique élevée et pour cette raison peuvent remplacer les métaux dans certaines applications. Ils ont l'avantage d'être plus légers que les métaux. Ils peuvent aussi être employés comme matrices dans des matériaux composites, comme adhésifs et comme revêtements.

Parmi les polymères thermodurs, on peut citer les polyesters insaturés, les phénoplastes, les polyépoxydes, les polyuréthannes, les aminoplastes.

Les résines thermodurcissables sont moulées et réticulées à chaud ou à température ambiante. La mise en oeuvre s'effectue par voie liquide à partir des monomères. Elles présentent donc l'inconvénient de nécessiter des manipulations et dosages de liquides précis pour leur mise en oeuvre. Le transport des composés précurseurs, sous forme liquide, n'est pas non plus satisfaisant en termes de sécurité.

En outre, les résines thermodurcissables classiques doivent être mises en oeuvre, en particulier elles doivent être moulées de façon à obtenir d'emblée la forme adéquate pour l'utilisation finale. En effet, aucune transformation n'est plus possible une fois que la résine est polymérisée, hormis l'usinage qui reste souvent délicat. Les pièces souples ou dures et les composites à base de résines thermodurcissables ne sont ni transformables, ni façonnables, elles ne peuvent pas être recyclées.

Parallèlement aux résines thermodurcissables, une classe de matériaux polymères, les thermoplastiques, a été mise au point. Les thermoplastiques peuvent être mis en forme à haute température par moulage ou par injection mais ont des propriétés mécaniques et de résistance thermique et chimique moins intéressantes que celles des thermodurs.

En outre, la mise en forme des thermoplastiques ne peut être réalisée que dans des gammes de température très étroites. En effet, les thermoplastiques lorsqu'ils sont chauffés deviennent des liquides dont la fluidité varie abruptement au voisinage des températures de fusion et de transition vitreuse ce qui ne permet pas de leur appliquer toute une variété de méthodes de transformation qui existent pour le verre et pour les métaux par exemple.

Un des objectifs de l'invention a été la mise au point de résines thermodurcissables qui soient transformables à chaud après durcissement. En particulier, les matériaux de l'invention ont la propriété de pouvoir être chauffés à des températures telles qu'ils deviennent façonnables sans subir de destruction ou de dégradation de leur structure. La viscosité de ces matériaux varie lentement sur une large plage de température avec un comportement qui se rapproche de la loi d'Arrhénius. Cette propriété permet de leur faire subir des transformations par des procédés très variés qui ne sont pas envisageables pour les thermoplastiques. Elle permet notamment d'obtenir des formes d'objets qui sont difficiles ou impossibles à obtenir par moulage ou pour lesquels la réalisation d'un moule s'avère trop coûteuse pour la fabrication envisagée. De plus, la présence de la transition vitreuse, détectable par DSC (analyse enthalpique différentielle) dans les matériaux de l'invention rend possible le piégeage et la relaxation contrôlés de contraintes locales. Cette situation permet d'envisager la conception et la fabrication d'objets de forme prédéfinie et dont la forme finale peut être obtenue par simple application de chaleur. L'invention permet de développer de nouvelles applications pour les résines thermodurcissables en facilitant leur mise en forme et leur recyclage. Ainsi elle peut ouvrir des domaines d'application et des modes de mise en oeuvre pour les résines thermodurcissables, notamment les résines époxy qui n'étaient absolument pas envisageables jusqu'à présent. L'invention permet enfin de remédier aux problèmes de dosage et de manipulation de liquides qui étaient inhérents à l'emploi de thermodurcissables jusqu'à présent.

### Etat de la technique

Il est connu de l'art antérieur (Aflal et al., Appl. Polym. Sci. 2009, 113, 2191) de réparer un objet à base de résine époxy. La solution proposée a consisté à ne faire réagir que partiellement les groupes fonctionnels époxy lors de la fabrication de l'objet. Cela a pu être réalisé en utilisant une quantité sous-stoechiométrique de durcisseur. Pour réparer un objet endommagé on applique alors une température élevée à la partie de l'objet concernée de telle sorte que les fonctions époxy restées libres réagissent entre elles et forment des liaisons covalentes.

Une autre méthode connue de la demande WO02064653 pour réparer un objet à base de polymère consiste à disperser dans le polymère des microcapsules remplies d'un agent polymérisable. L'endommagement de l'objet provoque une rupture des microcapsules et la libération de l'agent polymérisable dans la fracture. La polymérisation de

cet agent permet de réparer la fracture.

Ces méthodes sont toutefois limitées à la réparation d'objets et ne permettent pas d'envisager le recyclage de résines thermodurcissables ni leur transformation, une fois durcies, en un objet ayant une autre forme. En outre, ces méthodes de réparation ne permettent de réparer l'objet qu'une ou deux fois au maximum. En effet, lorsque toutes les fonctions époxy ont réagi - ou que les agents polymérisables ont polymérisé -, il n'est plus possible de réparer la pièce ou le matériau. Enfin, les matériaux comportant des capsules présentent le plus souvent des propriétés mécaniques inférieures à celles des résines dont ils sont composés.

Des systèmes polymères utilisant des liaisons covalentes réversibles ont déjà été décrits. Ainsi, on connaît par Lehn, J.M., Progress Polym. Sci., 2005, 30, 814-831, et Skene W.G., Lehn, J.M., P.N.A.S. 2004, 22, 8270-8275, des résines polymères capables de se dépolymériser et de se repolymériser sous l'action de la chaleur. L'équipe du Professeur Wudl (Chen X. et al., Science 2002, 295, 1698-1702) a décrit des matériaux autoréparants basés sur la réversibilité de la réaction de Diels-Alder.

Cependant, ces travaux ne concernent que la réparation et l'assemblage de pièces et n'envisagent pas la transformation d'un objet à base de résine thermodurcissable en un objet de forme différente.

Le document J.O.Outwater, D.G. Gerry, J.Adhesion, vol.1, 1969, 290-298 mentionne la possibilité de réparer par chauffage une fracture dans une résine époxy. Il est enseigné dans ce document que la restitution d'énergie associée à la disparition des surfaces de fracture est responsable de ce phénomène. Toutefois, ces observations n'ont pas été renouvelées depuis plus de 40 ans et n'ont conduit à aucun développement. Et la composition de résine qui a été utilisée dans ce document ne répond pas à la définition des compositions de l'invention et ne permet pas de transformer un objet ni d'être soumise à un recyclage.

Le document US-3,624,032 décrit une composition de résine époxy comprenant une résine époxy, un durcisseur de type anhydride d'acide et un catalyseur de type complexe métallique d'acétylacétone. On constate dans les exemples que les composants sont mis en oeuvre sous forme solide et les conditions de mise en oeuvre décrites ne permettent pas de solubiliser le catalyseur en quantité élevée dans le précurseur de résine thermodurcissable.

Le document US-3,932,343 décrit une composition de résine époxy adhésive comprenant une résine époxy, un anhydride d'acide et un catalyseur de type complexe métallique d'acétylacétone. On constate que les quantités molaires de catalyseur sont inférieures à 1,5% par rapport au nombre de moles de fonctions époxy de la résine.

Selon la présente invention, les résines thermodurcissables sont dotées d'une réversibilité chimique, qui, associée à une contrainte mécanique, peut être utilisée pour donner une nouvelle forme à un objet.

De plus les compositions de résines de l'invention se distinguent aussi de celles de l'art antérieur par le fait qu'il ne s'agit pas de résines spéciales mais qu'elles sont composées d'une résine thermodurcissable, en particulier d'une résine époxy, ordinaire, d'un durcisseur anhydride d'acide capable de réagir avec les fonctions époxydes en générant des fonctions hydroxyle et ester, d'un catalyseur d'estérification classique et d'un catalyseur de transestérification identique ou non. Elles se distinguent des résines époxy classiques par la présence de quantités de catalyseur de transestérification supérieures à celles habituellement employées, la transestérification n'étant habituellement pas recherchée ou envisagée.

Ces compositions et les procédés de l'invention sont donc utilisables dans toutes les applications habituelles des résines thermodurcissables, en particulier des résines époxy, mais présentent les propriétés avantageuses qui ont été mentionnées ci-dessus et sont illustrées de façon détaillée dans la description et les exemples de réalisation.

## Résumé de l'invention

L'invention a pour objet une composition de résine thermodurcissable, cette composition résultant de la réaction d'au moins un précurseur de résine thermodurcissable présentant des fonctions hydroxyle et/ou des groupements époxy, avec au moins un durcisseur choisi parmi les anhydrides d'acide, en présence d'au moins un catalyseur de transestérification, la quantité d'anhydride d'acide étant choisie de telle sorte que la résine soit sous la forme d'un réseau maintenu par des fonctions ester et qu'il reste des fonctions hydroxyle libres après réaction du précurseur avec le durcisseur.

Elle a également pour objet les matériaux composites comprenant une telle composition de résine, un procédé de fabrication d'un objet ou d'un matériau à base de cette résine, un procédé de transformation d'un objet à base de résine, un procédé de fabrication d'un objet à transformation contrôlée, un procédé de transformation d'un objet à transformation contrôlée, un procédé d'assemblage et collage de matériaux et composites à base de cette résine, un procédé de réparation d'objet à base de cette résine, un procédé de recyclage d'un objet à base de résine. Elle concerne encore les objets en matériau thermodurcissable susceptibles d'être obtenus par le procédé de l'invention.

L'invention se fonde sur les réactions de trans-estérification pouvant survenir quand un polymère contient à la fois des fonctions ester et des fonctions hydroxyle.

Pour permettre ces transestérifications et obtenir des matériaux avec une Tg élevée et une rigidité élevée, on fait polymériser des résines époxy en utilisant comme durcisseurs des anhydrides d'acide.

Pour que la réaction de transestérification soit exploitable dans une gamme de températures qui n'entraîne

pas la destruction du matériau et à des échelles de temps contrôlables, l'invention fait appel à un catalyseur.

Par rapport aux résines thermoplastiques, qui sont elles aussi susceptibles d'être transformées à chaud, le matériau selon l'invention peut être travaillé sans s'écouler sous son propre poids dans une gamme de températures beaucoup plus large ce qui permet d'appliquer des méthodes de transformation variées, notamment sans avoir recours de façon impérative à un moulage. Ces méthodes sont de même nature que celles employées dans les domaines des métaux et du verre.

Les résines et les matériaux de l'invention permettent aussi par l'application d'une température suffisante et d'une contrainte mécanique appropriée de mouler des objets en matériau thermodurcissable à partir du matériau thermodurci. Les résines et les matériaux de l'invention permettent aussi par l'application d'une température suffisante et à l'aide d'un bon contact des pièces, l'assemblage de pièces par le soudage de manière à former un objet plus complexe. Les résines et les matériaux de l'invention permettent aussi par l'application d'une température suffisante et d'une contrainte mécanique de réparer une fissure ou un endommagement causé à une pièce constituée du matériau ou à un revêtement à base du matériau.

Un autre avantage de ces résines et de ces matériaux est de permettre le recyclage du matériau après utilisation, les pièces pouvant être reconditionnées sous forme d'unités ou pièces élémentaires puis à nouveau remises en forme suivant l'invention.

**Description détaillée de l'invention**

L'invention a pour objet une composition de résine thermodurcissable, cette composition résultant de la mise en contact :

D'au moins un précurseur de résine thermodurcissable, ce précurseur de résine thermodurcissable comportant des fonctions hydroxyle et/ou des groupements époxy, et éventuellement des fonctions ester,
Avec au moins un durcisseur choisi parmi les anhydrides d'acide,
En présence d'au moins un catalyseur de transestérification, et dont la quantité totale en mole est entre 5 et 25% de la quantité molaire totale d'hydroxyle et d'époxy contenus dans le précurseur de résine thermodurcissable,
La quantité de durcisseur étant choisie de telle sorte que la résine soit sous forme d'un réseau et :

$N_o$ désignant le nombre de moles de fonctions hydroxyle dans le précurseur,
$N_x$ désignant le nombre de moles de groupement époxy dans le précurseur,
$N_A$ désignant le nombre de moles de fonctions anhydride du durcisseur capables de former une liaison avec une fonction hydroxyle ou avec un groupement époxy du précurseur de polymère thermodurcissable :

$$2N_A < N_O + 2N_x$$

De préférence, on choisit les quantités de réactifs de telle sorte qu'après réticulation il ne reste pas de fonctions époxy n'ayant pas réagi.

Cela se traduit par la relation $2N_A>N_x$

Par précurseur de résine thermodurcissable on entend au sens de la présente invention un oligomère, un prépolymère, un polymère ou toute macromolécule qui, lorsqu'il est mis à réagir avec un durcisseur, aussi appelé réticulant, en présence d'une source d'énergie, notamment de chaleur, et éventuellement d'une petite quantité de catalyseur, donne un réseau de polymère doté d'une structure solide, dure à basse température. Les résines thermodurcissables connues de l'art antérieur ne peuvent pas après réticulation être transformées sous l'action de la température, les réactions ayant conduit à la formation d'un réseau tridimensionnel étant irréversibles.

L'invention concerne plus particulièrement des matériaux obtenus par la réaction de précurseurs de résines thermodurcissables avec un ou plusieurs durcisseurs, et qui comportent a) des fonctions ester ainsi que b) des fonctions hydroxyle.

Ces matériaux comportent des fonctions ester et résultent de la réaction de polymérisation entre au moins un anhydride d'acide et un précurseur de résine thermodurcissable comprenant au moins une fonction époxy ou une fonction hydroxyle. On peut prévoir d'autres types de précurseurs et de réticulants résultant en une résine dotée de fonctions ester et de groupements hydroxyle libres, tels qu'un réticulant acide polycarboxylique avec un précurseur de résine comprenant des époxy ou un réticulant acide polycarboxylique avec un précurseur de résine comprenant des hydroxyles.

Selon l'invention on choisit des précurseurs qui comportent des groupements époxy et/ou des fonctions hydroxyle libres. Ces groupements époxy et ces fonctions hydroxyle libres sont susceptibles de réagir avec les fonctions réactives du durcisseur pour former un réseau tridimensionnel maintenu par des fonctions ester. On peut prévoir que

le précurseur de résine thermodurcissable soit lui-même sous forme d'une chaîne polyéther ou polyester qui comporte des fonctions hydroxyle et/ou des groupements époxy susceptibles de participer à une réaction de réticulation en présence d'un durcisseur. On peut aussi prévoir que le précurseur de résine thermodurcissable soit sous forme de résine acrylique ou méthacrylique comportant des groupes époxy.

De façon préférentielle, l'invention concerne des résines thermodurcissables de type résine époxy. Ainsi, de façon avantageuse, le précurseur de résine thermodurcissable est un précurseur de résine époxy. Avantageusement, le précurseur de résine époxy représente au moins 10% en masse de la masse de composition de précurseur thermodurcissable, avantageusement au moins 20%, de préférence au moins 40% et encore mieux au moins 60%.

Un précurseur de résine thermodurcissable de type résine époxy est défini comme une molécule contenant au moins un groupe époxyde. Le groupe époxyde également nommé oxirane ou éthoxyline, est représenté ci-dessous :

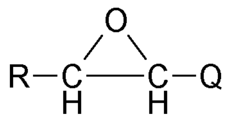

Dans lequel Q=H ou Q=R', R et R' étant des groupements hydrocarbonés.

Il existe deux grandes catégories de résines époxy : les résines époxy de type glycidyle, et les résines époxy de type non glycidyle. Les résines époxy de type glycidyle sont elles-mêmes classées en glycidyle éther, glycidyle ester et glycidyle amine. Les résines époxy non glycidyle sont de type aliphatique ou cycloaliphatique.

Les résines époxy glycidyle sont préparées par une réaction de condensation du composé dihydroxy approprié avec un diacide ou une diamine et avec de l'épichlorhydrine. Les résine époxy non glycidyle sont formées par peroxydation des doubles liaisons oléfiniques d'un polymère.

Parmi les éthers époxy glycidyle, le diglycidyl éther de bisphénol A (DGEBA) représenté ci-dessous est le plus couramment utilisé.

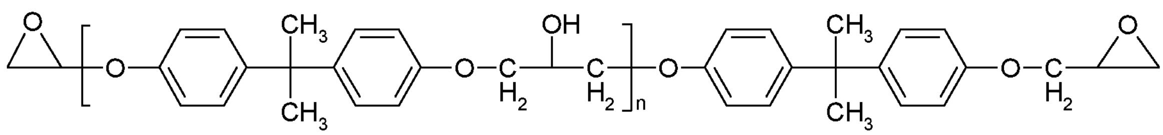

Les résines à base de DGEBA ont d'excellentes propriétés électriques, un faible retrait, une bonne adhérence sur de nombreux métaux et une bonne résistance à l'humidité, une bonne résistance thermique et aux chocs mécaniques.

Les propriétés des résines DGEBA dépendent de la valeur de n, qui est le degré de polymérisation, qui lui-même dépend de la stoechiométrie de la réaction de synthèse. En règle générale, n varie de 0 à 25.

Les résines époxy Novolac (dont la formule est représentée ci-dessous) sont des glycidyléthers de résines phénoliques novolaques. Elles sont obtenues par réaction du phénol avec le formaldéhyde en présence d'un catalyseur acide pour produire une résine phénolique novolaque, suivie d'une réaction avec l'épichlorhydrine en présence d'hydroxyde de sodium comme catalyseur.

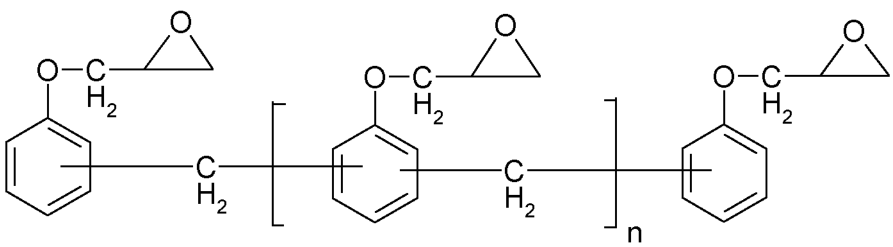

Les résines époxy Novolac contiennent généralement plusieurs groupes époxyde. Les multiples groupes époxyde permettent de réaliser des résines de haute densité de réticulation. Les résines époxy Novolac sont largement utilisées pour formuler des composés moulés pour la microélectronique en raison de leur résistance supérieure à une température élevée, de leur excellente aptitude au moulage, et de leurs propriétés supérieures mécaniques, électriques, de résistance à la chaleur et à l'humidité.

Les résines époxy auxquelles s'applique l'invention peuvent être quelconques à partir du moment où leurs précurseurs comprennent, avant réaction avec l'anhydride, un nombre moyen de fonctions époxyde et hydroxyle par précurseur tel que :

$$2< 2<n_X>+<n_O> .$$

Cette inégalité est à considérer dans le sens strict.
$<n_X>$ étant la moyenne en nombre du nombre de fonctions époxy par précurseur
$<n_O>$ étant la moyenne en nombre du nombre de fonctions hydroxyle par précurseur. La moyenne en nombre étant définie par :

<n>=Somme(P(i)*i)/Somme(P(i)), où P(i) est le nombre de molécules ayant i fonctions.

De préférence $3 \leq 2<n_X>+<n_O>$
Et encore plus avantageusement $4 \leq 2<n_X>+<n_O>$
Le précurseur de résine thermodurcissable utilisable dans la présente invention peut notamment être choisi parmi : Les résines époxy Novolac, le bisphénol A diglycidyl éther (DGEBA), le bisphénol F diglycidyl éther, le tétraglycidyl méthylène dianiline, le pentaérythritol tétraglycidyl éther, le tétrabromo bisphénol A diglycidyl éther, ou les hydroquinone diglycidyl éther, l'éthylène glycol diglycidyl éther, le propylène glycol diglycidyl éther, le butylène glycol diglycidyl éther, le néopentyl glycol diglycidyl éther, le 1,4-butanediol diglycidyl éther, le 1,6-hexanediol diglycidyl éther, le cyclohexanediméthanol diglycidyl éther, le polyéthylène glycol diglycidyl éther, le polypropylène glycol diglycidyl éther, le polytétraméthylène glycol diglycidyl éther, le résorcinol diglycidyl éther, le néopentylglycol diglycidyl éther, le bisphenol A polyéthylène glycol diglycidyl éther, le bisphénol A polypropylèneglycol diglycidyl éther, le diglycidyl ester d'acide téréphtalique, le poly(glycidyle-acrylate), le poly(glycidyle-méthacrylate), les acides gras polyinsaturés époxydés, les huiles végétales époxydées, les huiles de poissons époxydées, et le limonène époxydé; et leurs mélanges.
Avantageusement, il est choisi parmi : le DGEBA, l'huile de soja époxydée et les résines Novolac.
Un durcisseur est nécessaire pour former un réseau tridimensionnel réticulé à partir d'une résine époxy.
Il existe une grande variété de durcisseurs pour résines époxy. Les agents couramment utilisés pour réticuler les époxydes sont les amines, les polyamides, les résines phénoliques, les anhydrides, les isocyanates et les polymercaptans. La cinétique de réaction et la température de transition vitreuse, Tg, de la résine réticulée dépendent de la nature du durcisseur. Le choix de la résine et du durcisseur dépend essentiellement de l'application et des propriétés souhaitées. La stoechiométrie du système époxy-durcisseur affecte également les propriétés du matériau durci.
La résine selon la présente invention est fabriquée avec au moins un durcisseur choisi parmi les anhydrides d'acides.
Les durcisseurs de la classe des anhydrides d'acides sont, avec les diamines, typiquement utilisés pour obtenir des matériaux durs (réseaux réticulés avec une Tg supérieure à l'ambiante).
En présence de catalyseurs acides ou basiques, les anhydrides d'acides réagissent avec les groupements époxyde en formant des esters. Jusqu'à présent, les catalyseurs utilisés par l'homme de l'art ont été optimisés pour cette réaction d'estérification et sont ajoutés en quantités entre 1 et 3% molaires par rapport aux groupes époxy. [« Epoxy Resins, Chemistry and Technology », seconde Ed., édité par C.A. May, Marcel Dekker, New York1988]. Lorsqu'ils sont utilisés en quantité supérieure, on constate généralement qu'ils ne sont pas solubilisés dans le précurseur de résine thermodurcissable, dans les conditions de mise en oeuvre de l'art antérieur.
De façon préférentielle, les anhydrides cycliques peuvent être utilisés comme durcisseurs. Certains anhydrides cycliques communs sont représentés dans le tableau 1 ci-dessous.

| | | | | |
|---|---|---|---|---|
| **Anhydride phthalique** | **anhydride Méthyl-nadique** | **anhydride hexahydro phthalique** | **anhydride dodécenyl succinique** | **anhydride glutarique** |
| 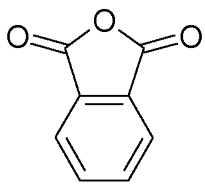 | 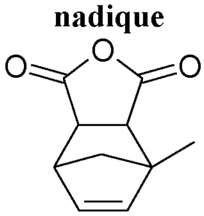 | 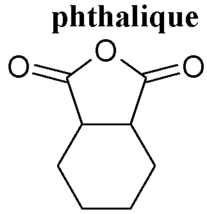 | 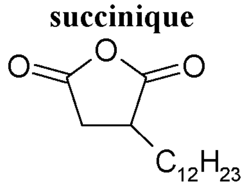 | 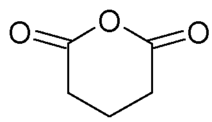 |
| Tg=150°C | Tg=144°C | Tg=132°C | Tg=75°C | Tg=75°C |

Tableau 1 - Description des principaux anhydrides employés comme agents réticulants avec des époxydes. La Tg indiquée correspond à des résines réticulées avec du DGEBA comme précurseur [« Epoxy Resins, Chemistry and Technology », seconde Ed., édité par C.A. May, Marcel Dekker, New York1988].

On peut également citer l'anhydride succinique, l'anhydride maléique, l'anhydride chlorendique, l'anhydride nadique, l'anhydride tetrachlorophtalique, le dianhydride pyromellitique, le dianhydride d'acide 1,2,3,4 cyclopentanetétracarboxylique, les polyanhydrides d'acides aliphatiques tels que le polyanhydride polyazélaique, le polyanhydride polysébacique.

De préférence ce durcisseur est choisi parmi : l'anhydride glutarique, l'anhydride phtalique, et l'anhydride hexahydrophtalique. Et encore plus préférentiellement on choisit l'anhydride glutarique qui a la propriété de faciliter la solubilisation des catalyseurs préférentiellement employés.

Le ou les durcisseurs de type anhydride peuvent être employés seuls ou en mélange avec d'autres types de durcisseurs notamment des durcisseurs de type amine ou des durcisseurs de type acide.

Un durcisseur de type amine peut être choisi parmi les amines primaires ou secondaires ayant au moins une fonction $NH_2$ ou deux fonctions NH et de 2 à 40 atomes de carbone. Cette amine peut par exemple être choisie parmi les amines aliphatiques telles que la diéthylène triamine, la triéthylène tétramine, la tétraéthylène pentamine, la dihexylène triamine, la cadavérine, la putrescine, l'hexanediamine, la spermine, l'isophorone diamine, ainsi que les amines aromatiques telles que la phénylène diamine, la diamino diphénylméthane, la diamino diphénylsulfone, la méthylène bischlorodiéthylaniline.

Avantageusement, lorsqu'un durcisseur amine est employé dans le mélange, le rapport amine/époxy est limité de manière à ce que en absence de liaisons esters, les liaisons amine tertiaire ainsi créées ne suffisent pas pour passer le point de gel. En pratique l'homme de l'art peut se fonder sur la vaste littérature existant sur les systèmes époxy-amine pour choisir la composition adéquate. Le test décrit ci-dessous qui concerne la formation d'un réseau peut être employé pour vérifier le non dépassement du point de gel :

> Dans un matériau, nous considérons que le point de gel n'est pas atteint tant qu'un plot cylindrique fait de ce matériau, avec une hauteur initiale d'approximativement 1 cm à température ambiante et un diamètre de 1 cm, après avoir été laissé 10h à une température de 50°C au dessus de la Tg (mesurée par DSC) puis équilibré 30 min à température ambiante, présente une hauteur finale différente de plus de 20% de la hauteur initiale.

Comme acides utilisables dans l'invention, on peut citer les acides carboxyliques comprenant 2 à 40 atomes de carbone, comme les diacides linéaires (glutarique, adipique, pimélique, subérique, azélaïque, sébacique, dodécanedioïque et leurs homologues de masses supérieures) ainsi que leurs mélanges, ou les dérivés d'acides gras, les trimères (oligomères de 3 monomères identiques ou différents) et mélanges de dimères et trimères d'acides gras, en particulier d'origine végétale. Ces composés résultent de l'oligomérisation d'acides gras insaturés tels que : l'acide undécylénique, myristoléique, palmitoléique, oléique, linoléique, linolénique, ricinoléique, eicosénoïque, docosénoïque, que l'on trouve habituellement dans les huiles de pin, colza, maïs, tournesol, soja, pépins de raisin, lin, jojoba, ainsi que les acides eicosapentaénoïque et docosahexaénoïque que l'on trouve dans les huiles de poissons.

Comme acides utilisables dans l'invention, on peut encore citer les acides carboxyliques aromatiques comprenant 2 à 40 atomes de carbone, comme les diacides aromatiques tels que l'acide phtalique, l'acide trimellitique, l'acide téréphtalique ou l'acide naphtalènedicarboxylique.

Avantageusement, lorsqu'un ou plusieurs durcisseurs autre que les anhydrides est employé en mélange avec le ou les durcisseurs de type anhydride, l'anhydride représente au moins 10%, et de préférence au moins 20%, avantageusement au moins 40%, encore mieux au moins 60% en mole par rapport à l'ensemble des durcisseurs.

Suivant l'art antérieur, dans des rapports équimolaires de groupes anhydrides et époxy, des réseaux de polyester hautement réticulés sont obtenus, dans lesquels les diépoxydes et les anhydrides cycliques mènent à des unités ayant respectivement une fonctionnalité de 4 et de 2.

Dans des rapports équimolaires de groupes anhydrides et époxy, ces réseaux n'ont pas les groupes hydroxyle libres nécessaires pour une réaction de transestérification. Selon l'invention, un compromis doit être choisi entre la présence d'hydroxyles libres permettant de faire des réactions de transestérification et une haute densité de réticulation donnant un matériau solide et résistant mécaniquement.

Dans le sens de cette invention, un réseau est formé à partir du moment où il existe un chemin continu constitué d'une succession de monomères unis les uns aux autres par des ponts ester, ce chemin traversant de bout en bout l'échantillon. Ces monomères peuvent provenir des précurseurs thermodurcissables et/ou des durcisseurs. L'homme de l'art connaît des guides théoriques et/ou empiriques pour déterminer les compositions permettant d'obtenir un réseau à partir des résines et durcisseurs envisagés (cf par exemple P.J. Flory Principles of Polymer Chemistry Cornell University Press Ithaca-NY 1953).

Selon l'invention on utilise le durcisseur en quantité suffisante pour former un réseau. Dans la pratique, on en est assuré si, après formation des ponts esters, un plot cylindrique fait de ce matériau, avec une hauteur initiale d'approximativement 1 cm à température ambiante et un diamètre de 1 cm, après avoir été laissé 10h à une température de 50°C au dessus de la Tg (mesurée par DSC) puis équilibré 30 min à température ambiante, présente une hauteur finale différente de moins de 20% de la hauteur initiale.

Lorsque l'on utilise un précurseur comportant au moins deux fonctions époxy par molécule, et un anhydride cyclique, les conditions déjà énoncées sont suffisantes pour obtenir un réseau:

$$2N_A < N_O + 2N_x$$

$$2N_A > N_x$$

Un des catalyseurs au moins doit être choisi parmi les catalyseurs de transestérification. Certains catalyseurs de transestérification permettent de catalyser la réaction des époxydes avec le durcisseur. Mais on peut aussi prévoir d'employer un catalyseur spécifique de l'ouverture des époxydes en plus du catalyseur de transestérification.

Les catalyseurs de transestérification sont employés dans l'invention en quantité allant de 5 à 25% molaire par rapport à la quantité molaire totale d'hydroxyle et d'époxy contenus dans le précurseur de résine thermodurcissable. Cette proportion de catalyseur est significativement supérieure aux quantités employées dans l'art antérieur.

Selon l'invention, on entend par catalyseur de transestérification, un composé satisfaisant au test suivant :

<u>Test catalyseur :</u>

*Préparation de l'ester E1 :*

Dans un tube à essai, on place 6,1 mmol d'acide octanoïque (Mw = 144,2 g/mol, m = 0,88 g) et 0,37 mmol (6 %mol) de catalyseur C1, la 2-méthylimidazole (2-MI, Mw = 82,1 g/mol, m~30 mg). A température ambiante, l'acide octanoïque est sous forme liquide alors que la 2-MI est un solide qui sédimente au fond du tube. A 120°C et sous une légère agitation manuelle, le catalyseur est solubilisé rapidement. On ajoute 6,1 mmol de Benzyl Glycidyl Ether (Mw = 164,2 g/mol, m = 1g) et on agite afin d'homogénéiser le mélange réactionnel.

Le mélange est chauffé sous un flux d'azote (~ 40 mL/min) à 120°C.

L'avancement de la réaction est mesuré par spectroscopie IR en suivant l'intensité des bandes $\upsilon_{C=0}$ de l'ester à 1735 $cm^{-1}$ et de l'acide à 1705 $cm^{-1}$ ainsi que $\delta_{C-O-C}$ (ring vibration) de l'époxy à 915 $cm^{-1}$.

Au bout d'une heure, on constate par ce moyen que la conversion n'évolue plus. L'analyse par RMN $^{13}C$ (CDC13/TMS) confirme la disparition du signal [COOH] à 181 ppm et l'apparition du signal [COOR] à 174 ppm.

Le produit obtenu en fin de cette réaction est l'ester E1, produit de l'estérification entre l'acide octanoïque et le benzyl glycidyl ether, ce qui est confirmé par l'analyse RMN $^{1}H$ et $^{13}C$.

*Préparation de l'ester E2 :*

Le protocole est identique au précédent. Le mélange réactionnel est alors constitué de 6,7 mmol de Phényl Glycidyl Ether (Mw = 150,2 g/mol, m = 1g), de 6,7 mmol d'acide décanoïque (Mw = 172,3 g/mol, m = 1,15 g) et de 0,4 mmol de 2-MI (6%mol, m ~ 33 mg). L'acide décanoïque et le catalyseur C1 sont sous forme solide : le mélange est donc homogénéisé sous une légère agitation à 120°C. La réaction est effectuée à 120°C sous un flux d'azote de 40 mL/min. L'avancement de la réaction est suivi de la même manière que précédemment : la conversion est terminée au bout d'une heure. Cela est vérifié par la RMN $^{13}C$. Le produit obtenu est l'ester E2.

*Essais de transestérification :*

Dans un tube à essai, on place 0,65 mmol de E1, 0,65 mmol de E2 et 0.032 mmol (5 %mol) de catalyseur C2, qui est le produit à tester. Le mélange est homogénéisé en chauffant à 150°C et en agitant légèrement. Le mélange réactionnel est chauffé à 150°C à l'aide d'un bain d'huile sous un flux d'azote de 40mL/min.

Des prélèvements sont effectués régulièrement afin de suivre la cinétique de transestérification. Chaque prélèvement est analysé par chromatographie en phase gazeuse couplé à la spectrométrie de masse (GCMS) à l'aide d'un appareil Shimadzu GCMS-QP 2010S. L'analyse chromatographique est effectuée par un Shimadzu GC-2010 équipé d'une colonne capillaire Supelco (modèle 28041-U) de longueur 12 m, de diamètre intérieur 0,2 mm garnie d'un film de 0,33 μm de phase stationnaire poly(dimethylsiloxane), non polaire (phase Equity™-1). Le gaz vecteur est l'hélium, avec une pression d'entrée de 34,6 kPa, un débit total de 44,4 mL/min, un débit dans la colonne de 0,68 mL/min, une vitesse linéaire de 48 cm/s et un débit de purge de 3 mL/min.

L'injection de 1μL de solution dans le méthanol du produit à analyser à une concentration comprise entre 1mg/g à 5mg/g est effectuée à une température d'injection de 250°C en mode Split, avec un ratio de split de 60%. Le cycle de

température de la colonne après l'injection se décompose en un plateau à 80°C pendant 30s suivi d'une rampe de pente 24°C/min jusqu'à 280°C. Cette température est ensuite maintenue constante pendant 7 min pour une durée totale d'analyse de 16 min.

La chromatographie GC est couplée à un spectromètre de masse par impact électronique (SMIE) Shimadzu à 70 eV. La température de la source d'ions ainsi que celle de l'interface sont respectivement 200 et 300°C.

L'aire des signaux présents sur le chromatogramme de la figure 2 correspondant aux monoesters E1, E2, E3 et E4, produits d'échange, est mesurée (ces aires sont notées respectivement A1, A2, A3 et A4). Les monoesters sont identifiés grâce à la fragmentation obtenue par spectrométrie de masse. Les temps de rétention correspondant aux monoesters E1, E2, E3 et E4 sont respectivement 7,9, 8,4, 7,6 et 8,6 min. La cinétique est obtenue en traçant le rapport des aires (A3+A4)/(A1+A2) en fonction du temps de prélèvement et illustrée sur la figure 3.

Avantageusement, un produit est considéré comme un catalyseur au sens de la présente invention si le temps pour lequel le rapport atteint 0,9 est inférieur à 5h.

De préférence, le catalyseur est choisi parmi les sels métalliques de zinc, d'étain, de magnésium, de cobalt, de calcium, de titane, et de zirconium. Avantageusement, le catalyseur est choisi parmi ceux ayant une cinétique de transestérification comparable à celle des sels métalliques de zinc, d'étain, de magnésium, de cobalt, de calcium, de titane, et de zirconium. Le catalyseur peut également être choisi parmi les catalyseurs de nature organique comme : le benzyldiméthylamide, le chlorure de benzyl triméthylammonium.

Ces catalyseurs sont généralement sous forme solide et dans ce cas, avantageusement sous forme d'une poudre finement divisée.

On peut employer un catalyseur hétérogène, c'est-à-dire un catalyseur qui n'est pas dans la même phase que les réactifs, mais on emploie avantageusement un catalyseur homogène, présent dans la même phase que les réactifs.

Comme cela est expliqué ci-dessous dans la description du procédé, le catalyseur est solubilisé dans le précurseur de résine thermodurcissable ou dans le durcisseur.

Le catalyseur, solide ou liquide, est de préférence soluble dans le précurseur de résine thermodurcissable. Avantageusement le catalyseur, solide ou liquide, est soluble dans le précurseur de résine thermodurcissable dans les conditions de mise en oeuvre du procédé de l'invention.

De préférence, le catalyseur est choisi parmi : l'acétylacétonate de zinc (Zn(Acac)), le benzyldiméthylamide.

Parmi les catalyseurs d'ouverture d'époxyde qui peuvent être employés en plus du catalyseur de transestérification, on peut citer : le tétrachlorure d'étain, les sels organoborés, les trialkylamines, l'hexaméthylènetétramine, les sels d'étain divalents, les condensats aniline-formaldéhyde, les amines tertiaires, les N,N-alcanolamines, les chélates de métaux comprenant des groupes époxy, les sels d'amine de polyacides, les sels d'uranium, les trialcanolamine borates, les phosphines organosubstituées, les fluoroborates, les sels d'ammonium quaternaires, les sels de monoimidazoline quaternaires, les dicyanodiamides, les imidazolines.

Lorsque l'on utilise un catalyseur d'ouverture d'époxyde, celui-ci est avantageusement présent en quantités allant de 0,1% à 5% molaire par rapport au nombre de moles de groupements époxydes.

L'invention a encore pour objet un kit pour la préparation d'une résine thermodurcissable ou pour la préparation d'un matériau composite comprenant une résine thermodurcissable telle que décrite ci-dessus comprenant au moins une première composition comprenant un précurseur de résine thermodurcissable, ce précurseur de résine thermodurcissable comportant des fonctions hydroxyle et/ou des groupements époxy, et éventuellement des fonctions ester, au moins une seconde composition comprenant un durcisseur choisi parmi les anhydrides d'acide et au moins un catalyseur de transestérification, la première et la seconde composition étant dans un conditionnement adapté pour empêcher la réaction de réticulation entre le précurseur et le durcisseur de se produire sans intervention d'un opérateur.

Un tel kit permet de préparer une résine thermodurcissable, la première et la seconde compositions étant mélangées juste avant emploi.

Un tel conditionnement peut consister en un récipient comportant deux ou trois compartiments internes permettant le stockage séparé de chacun des composants, étant entendu que le catalyseur peut éventuellement être stocké dans le même compartiment que le précurseur ou que le durcisseur. Préférentiellement le catalyseur est stocké dans le même compartiment que le précurseur de résine thermodurcissable. Il peut être prévu un moyen permettant la mise en contact des contenus des différents compartiments de façon à initier la réticulation dans le récipient. On peut aussi prévoir un kit consistant en deux ou trois flacons distincts associés dans un même emballage et comportant chacun les quantités adaptées de chaque produit pour la préparation de la résine thermodurcissable, de façon à éviter à l'utilisateur des opérations de pesée et/ou de dosage.

Selon une variante, le kit pour la préparation d'une résine thermodurcissable peut consister en un seul et unique récipient, comprenant le mélange en quantité appropriées des trois composants : précurseur, anhydride et catalyseur. En effet, en l'absence de chauffage et à la différence des mélanges époxy-amine, les mélanges précurseur époxy + anhydride ont une stabilité d'environ deux mois à température ambiante, même en présence de catalyseur. L'intervention de l'opérateur se limite alors à un chauffage.

L'invention a encore pour objet des compositions de matériau composite thermodurcissable comprenant au

moins une résine thermodurcissable dont la composition a été décrite ci-dessus. Un tel matériau peut comprendre, outre la ou les résines thermodurcissables selon l'invention : un ou plusieurs polymères, des pigments, des colorants, des charges, des plastifiants, des fibres, des agents retardateurs de flamme, des agents antioxydants, des lubrifiants, du bois, du verre, des métaux.

Parmi les polymères qui peuvent être employés en mélange avec la composition de résine thermodurcissable de l'invention, on peut mentionner : des élastomères, des thermoplastiques, des élastomères thermoplastiques, des additifs chocs.

Par pigments, on entend des particules colorées insolubles dans la résine époxy. Comme pigments utilisables dans l'invention, on peut citer l'oxyde de titane, le noir de carbone, les nanotubes de carbone, les particules métalliques, la silice, les oxydes métalliques, les sulfures métalliques ou tout autre pigment minéral, on peut également citer les phtalocyanines, les anthraquinones, les quinacridones, les dioxazines, les pigments azoïques ou tout autre pigment organique, les pigments naturels (garance, indigo, pourpre, cochenille, etc) et les mélanges de pigments. Les pigments peuvent représenter de 0,05 % à 15% du poids par rapport au poids du matériau.

Par colorants, on entend des molécules solubles dans la résine époxy et ayant la capacité d'absorber une partie du rayonnement visible.

Parmi les charges qui peuvent être employées dans la composition de résine thermodurcissable de l'invention, on peut mentionner : la silice, les argiles, le carbonate de calcium, le noir de carbone, le kaolin, les whiskers.

On peut également prévoir la présence dans les compositions de résine thermodurcissable de l'invention des fibres telles que des fibres de verre, des fibres de carbone, des fibres polyester, des fibres polyamides, des fibres aramides, des fibres cellulosiques et nanocellulosiques ou encore des fibres végétales (lin, chanvre, sisal, bambou...).

On peut également prévoir que les compositions de résine thermodurcissables de l'invention soient utilisées pour fabriquer des matériaux sandwich par superposition en alternance de couches de résine avec des couches de bois, de métal, ou de verre.

La présence dans la composition de résine thermodurcissable de pigments, de colorants ou de fibres capables d'absorber le rayonnement peut être utilisée pour assurer le chauffage d'un objet à base d'une telle résine au moyen d'une source de rayonnement telle qu'un laser. La présence dans la composition de résine thermodurcissable de pigments, de fibres ou de charges conductrices de l'électricité tels que noir de carbone, nanotubes de carbone, fibres de carbone, poudres métalliques ou de particules magnétiques peut être utilisée pour assurer le chauffage d'un objet à base d'une telle résine par effet Joule, par induction ou par micro-ondes. Un tel chauffage peut permettre la mise en oeuvre d'un procédé de fabrication, de transformation ou de recyclage d'un objet en résine thermodurcissable suivant un procédé qui est décrit ci-dessous.

L'invention a encore pour objet un procédé de fabrication d'un objet à base d'une composition de résine thermodurcissable telle que décrite ci-dessus, ce procédé comprenant :

a) la mise en contact d'une première composition comprenant au moins un précurseur de résine thermodurcissable, avec une seconde composition comprenant au moins un durcisseur choisi parmi les anhydrides d'acide, en présence d'au moins un catalyseur de transestérification,
b) la mise en forme de la composition issue de l'étape a)
c) l'application d'une énergie permettant le durcissement de la résine
d) le refroidissement de la résine durcie.

La mise en contact des composants peut se faire dans un mélangeur de tout type connu de l'homme du métier. L'application d'une énergie permettant le durcissement de la résine à l'étape c) du procédé peut consister de façon connue en un chauffage à une température allant de 50 à 250°C. Le refroidissement de la résine durcie est habituellement opéré en laissant le matériau revenir à la température ambiante, avec ou sans utilisation d'un moyen de refroidissement.

Le procédé est avantageusement mis en oeuvre de façon à atteindre ou dépasser le point de gel de la résine à l'issue de l'étape d). Notamment, le procédé de l'invention comporte avantageusement l'application d'une énergie suffisante à l'étape c) pour que le point de gel de la résine soit atteint ou dépassé.

Par objet, on entend au sens de la présente invention, une pièce thermodurcie à base d'un matériau comprenant une résine thermodurcissable, en particulier une résine époxy, telle que décrite ci-dessus. Il peut aussi s'agir d'un objet en matériau composite, d'un revêtement, d'un plot, d'un cordon ou d'un film d'adhésif à base de résine thermodurcissable. Notamment on peut prévoir d'introduire avant, pendant ou après l'étape a) un ou plusieurs composants additionnels qui peuvent notamment être choisis parmi des polymères, des pigments, des colorants, des charges, des plastifiants, des fibres, des agents retardateurs de flamme, des agents antioxydants, des lubrifiants, du bois, du verre, des métaux. Avantageusement, dans les objets selon l'invention, la résine a atteint ou dépassé le point de gel.

Les objets selon l'invention peuvent également consister en des revêtements qui sont déposés sur un support, comme une couche de protection ou une peinture par exemple. Ils peuvent également consister en un matériau adhésif.

En pratique le catalyseur est d'abord solubilisé dans la composition comprenant le précurseur de résine thermodurcissable ou dans la composition comprenant le durcisseur, puis les deux compositions sont mélangées. Un objet résultant de la mise en forme et du durcissement de la composition de résine décrite ci-dessus fait également partie de l'invention.

En particulier l'invention concerne un objet à base de résine thermodurcissable susceptible d'être obtenu par le procédé décrit ci-dessus.

Notamment, elle concerne un objet, ou matériau thermodurci, à base de résine thermodurcissable, cette résine ayant atteint ou dépassé le point de gel.

Par application d'une énergie permettant le durcissement de la résine on entend généralement une élévation de température.

De façon habituelle, un objet à base de résine thermodurcissable est fabriqué par mélange des composants : précurseur, durcisseur, catalyseur et additifs, introduction dans un moule et élévation de la température. Les moyens de fabrication d'un tel objet sont bien connus de l'homme du métier.

Mais on peut prévoir grâce aux compositions de résine de l'invention d'autres modes de mise en forme de l'objet que le moulage telles que l'enroulement filamentaire, le moulage en continu ou entre pellicules, l'infusion, la pultrusion, RTM (resin transfer molding), RIM (réaction-injection-moulage) ou toutes autres méthodes connues de l'homme de l'art, telles que décrites dans les ouvrages « Epoxy Polymer », édité par J.P. Pascault et R.J.J. Williams, Wiley-VCH, Weinheim 2010 ou «Chimie industrielle », par R. Perrin et J.P. Scharff, Dunod, Paris 1999.

Avec l'application d'un tel procédé aux compositions de résine thermodurcissable de l'art antérieur, une fois la résine durcie, l'objet n'est plus transformable ni réparable, ni recyclable. En effet, une fois que le point de gel de la résine est atteint ou dépassé, un objet en résine thermodurcissable de l'art antérieur n'est plus ni transformable ni réparable, ni recyclable.

L'application d'une température modérée à un tel objet selon l'art antérieur ne conduit à aucune transformation observable ou mesurable, et l'application d'une température très élevée conduit à la dégradation de cet objet.

Au contraire, les matériaux à base de résine thermodurcissable de l'invention, en raison de leur composition particulière, peuvent être transformés, réparés et recyclés par une élévation de la température de l'objet.

En dessous de la température Tg, le polymère est vitreux et présente le comportement d'un corps solide rigide.

Les matériaux résultant du durcissement de la résine thermodurcissable décrite ci-dessus constituent un autre objet de l'invention.

Au dessus de la température de transition vitreuse Tg, le matériau thermodurci de l'invention, présente un comportement viscoélastique sur une large gamme de température, avec un module de conservation compris entre $5\times10^5$ et $5\times10^7$ Pa suivant la composition. Ce module de conservation peut être déterminé à l'aide d'une mesure dynamique mécanique à 1Hz connue de l'homme de l'art. Dans une expérience de fluage, on observe une déformation de nature élastique aux temps très courts, après laquelle, contrairement aux matériaux thermodurs classiques, on observe une déformation non recouvrable variant quasi linéairement en fonction du temps. Cette évolution quasi linéaire permet de définir une viscosité selon la relation $\sigma/\eta=d(\varepsilon)/dt$, où $\sigma$ est la contrainte appliquée en Pa, $\varepsilon$ la déformation en mm/mm, t le temps en s, et $\eta$ la viscosité en Pa.s.

Suivant la composition, la viscosité déterminée en utilisant une contrainte de 1 MPa pour le fluage varie entre $10^5$ Pa.s et $10^{10}$ Pa.s à une température de Tg+150°C pour les matériaux selon l'invention. La déformation non recouvrable ainsi mesurée est donc supérieure à 10% après un temps de fluage de 20 min.

L'invention concerne donc encore un matériau thermodurci, à base de résine thermodurcissable dont la viscosité est comprise entre $10^5$ et $10^{10}$ Pa.s à des températures comprises entre 150°C et 300°C.

Cette variation lente de viscosité sur une large gamme de température rend le comportement du matériau comparable à celui des verres inorganiques et permet de leur appliquer des procédés de transformation supplémentaires par rapport à ceux applicables aux thermoplastiques.

Pour une même composition, la viscosité du matériau suit une dépendance du type Arrhénius en fonction de la température, et ce sur un large (typiquement 100°C à 300°C) intervalle de températures : $\eta=B\times\exp(-A/T)$, où A est le paramètre d'activation en $K^{-1}$, T est la température absolue en K, et B une constante en Pa.s. La valeur du paramètre d'activation se trouve typiquement entre 7000 et 12000 $K^{-1}$.

D'un point de vue pratique, cela implique que dans une large gamme de température, un objet, ou matériau thermodurci, peut être façonné en appliquant des contraintes de l'ordre de 1 à 10 MPa sans pour autant couler sous son propre poids.

De la même façon, on peut déformer l'objet, ou le matériau thermodurci, à une température supérieure à la température Tg, puis dans un deuxième temps éliminer les contraintes internes à une température plus élevée.

Sans pour autant être tenus à cette explication, les inventeurs pensent que les échanges de transestérification sont à l'origine du fluage et de la variation de viscosité à hautes températures. En termes d'application, ces matériaux peuvent être traités à des températures élevées, où une viscosité faible permet l'injection ou le moulage sous presse. Il faut noter que, contrairement aux réactions de Diels-Alder, aucune dépolymérisation n'est constatée à des températures élevées et le matériau conserve sa structure réticulée. Cette propriété permet la réparation de deux parties d'un objet.

Aucun moule n'est nécessaire pour maintenir la forme des pièces pendant le processus de réparation à des températures élevées. De la même façon, on peut transformer des pièces par application d'une contrainte mécanique à une partie seulement d'un objet sans avoir besoin d'un moule, car le matériau ne coule pas. Toutefois, les pièces de grande taille, qui ont davantage tendance à s'affaisser, pourront être maintenues par un bâti comme dans le travail du verre. Le collage et la réparation d'objets constituent un cas particulier de transformations d'objets selon l'invention.

Un autre objet de l'invention est donc un procédé de transformation d'au moins un objet réalisé à partir d'un matériau tel que décrit ci-dessus, ce procédé comprenant : l'application à l'objet d'une contrainte mécanique à une température (T) supérieure à la température ambiante.

De préférence, pour permettre la transformation dans une durée compatible avec une application industrielle du procédé, le procédé comprend l'application à l'objet d'une contrainte mécanique à une température (T) supérieure à la température de transition vitreuse Tg du matériau composant l'objet.

Habituellement, un tel procédé est suivi d'une étape de refroidissement jusqu'à la température ambiante, éventuellement avec application d'au moins une contrainte mécanique.

Par contrainte mécanique, on entend au sens de la présente invention, l'application d'une force mécanique, localement ou sur tout ou partie de l'objet, cette force mécanique tendant à une mise en forme ou une déformation de l'objet.

Parmi les contraintes mécaniques qui peuvent être employées, on peut mentionner : la pression, le moulage, le malaxage, l'extrusion, le soufflage, l'injection, l'estampage, la torsion, la flexion, la traction et le cisaillement.

Il peut s'agir par exemple d'une torsion appliquée à un ruban de matériau de l'invention. Il peut s'agir d'une pression appliquée à l'aide d'une plaque ou d'un moule sur une ou plusieurs faces d'un objet de l'invention, de l'estampage d'un motif dans une plaque ou une feuille en matériau de l'invention. Il peut encore s'agir d'une pression exercée parallèlement sur deux objets en matériaux de l'invention en contact l'un avec l'autre de façon à provoquer un collage de ces objets. Dans le cas où l'objet consiste en des granulés de matériau de l'invention, la contrainte mécanique peut consister en un malaxage, par exemple au sein d'un mélangeur ou autour de la vis d'une extrudeuse. Elle peut aussi consister en une injection ou une extrusion. La contrainte mécanique peut également consister en un soufflage, qui peut par exemple être appliqué à une feuille de matériau de l'invention. La contrainte mécanique peut également consister en une multiplicité de contraintes distinctes, de même nature ou non, appliquées de façon simultanée ou successive à tout ou partie de l'objet ou de façon très localisée.

Cette transformation peut inclure un mélange ou une agglomération avec un ou plusieurs composants additionnels choisis parmi : un ou plusieurs polymères, des pigments, des colorants, des charges, des plastifiants, des fibres, des agents retardateurs de flamme, des agents antioxydants, des lubrifiants.

L'assemblage, le collage et la réparation sont des cas particuliers du procédé de transformation décrit ci-dessus.

Cette élévation de la température de l'objet peut être réalisée par tout moyen connu comme le chauffage par conduction, convection, induction, par point, infra rouge, micro-onde ou radiant. Les moyens permettant de provoquer une élévation de température de l'objet pour la mise en oeuvre des procédés de l'invention comprennent : un four, un four à micro-ondes, une résistance chauffante, une flamme, une réaction chimique exothermique, un faisceau laser, un fer à repasser, un pistolet à air chaud, une cuve à ultrasons, un poinçon chauffant...

L'élévation de température peut être faite par plateaux ou non et sa durée est adaptée au résultat attendu en fonction des indications qui vont être données et des exemples détaillés ci-dessous.

Le procédé de l'invention repose sur les réactions de transestérification qui sont favorisées par la présence du catalyseur et par les fonctions OH libres au sein du réseau de polymère dans les matériaux de l'invention suivant une dynamique illustrée sur la figure 1 ci-jointe.

Bien que le matériau ne coule pas durant la transformation, grâce aux réactions de transestérification, en choisissant une température, une durée de chauffage et des conditions de refroidissement appropriées, la nouvelle forme peut être exempte de toute contrainte résiduelle. Le matériau n'est donc pas fragilisé ou fracturé par l'application de la contrainte mécanique. Et si la pièce est ultérieurement réchauffée, elle ne reviendra pas à sa forme première. En effet, les réactions de transestérification qui surviennent à haute température favorisent une réorganisation des points de réticulation du réseau polymère de manière à annuler les contraintes mécaniques. Une durée de chauffage suffisante permet d'annuler complètement ces contraintes mécaniques internes au matériau qui ont été causées par l'application de la contrainte mécanique externe.

Cette méthode permet donc d'obtenir des formes complexes stables, difficiles voire impossibles à obtenir par moulage, à partir de formes élémentaires plus simples. Notamment, il est très difficile d'obtenir par moulage des formes résultant d'une torsion.

Et de façon complémentaire, le choix de conditions de température, de durée de chauffage sous contrainte et de refroidissement appropriées permet de transformer un objet tout en contrôlant la persistance de certaines contraintes mécaniques internes au sein de l'objet, puis, si la pièce est ultérieurement réchauffée, une transformation contrôlée de la pièce par libération contrôlée des contraintes peut être opérée.

L'invention a donc encore pour objet un procédé de fabrication d'un objet à transformation postérieure programmée, ce procédé comprenant l'application à un premier objet d'une contrainte mécanique à une température (T) supérieure à la température ambiante, préférentiellement supérieure à la température de transition vitreuse Tg du matériau composant le premier l'objet, puis son refroidissement, la température T et sa durée d'application étant contrôlées de telle sorte qu'une contrainte mécanique interne permettant la transformation ultérieure soit conservée dans l'objet après refroidissement.

Avantageusement, le premier objet auquel est appliqué ce procédé est à base d'une résine thermodurcie ayant atteint ou dépassé le point de gel.

Par exemple, on peut mentionner une plaque en matériau de l'invention qui est pliée à une température supérieure à la Tg du matériau dont elle est composée, puis refroidie rapidement avant relaxation des contraintes internes. Un chauffage ultérieur de la zone de pliage sans application d'une contrainte mécanique externe permet de déplier l'objet suivant un angle choisi correspondant à la libération de la contrainte résiduelle.

L'invention a encore pour objet un procédé de transformation d'un objet à transformation postérieure programmée, ce procédé comprenant l'application à un objet à transformation postérieure programmée tel que décrit ci-dessus d'une température (T) supérieure à la température ambiante, préférentiellement supérieure à la température de transition vitreuse Tg du matériau composant l'objet, la température, sa durée d'application et sa localisation étant choisies de façon à libérer tout ou partie des contraintes mécaniques internes de l'objet. Cette élévation de température contrôlée est suivie d'un refroidissement.

Avantageusement, l'objet à transformation postérieure programmée auquel est appliqué ce procédé est à base d'une résine thermodurcie ayant atteint ou dépassé le point de gel.

Un objet en matériau de l'invention peut également être recyclé :

Soit par traitement direct de l'objet : par exemple l'objet cassé ou endommagé est réparé par un procédé de transformation tel que décrit ci-dessus et peut ainsi retrouver sa fonction d'usage antérieure ou une autre fonction.

Soit l'objet est réduit en particules par application d'un broyage mécanique, et les particules ainsi obtenues peuvent ensuite être mises en oeuvre dans un procédé de fabrication d'un objet. Notamment, selon ce procédé, des particules de matériau de l'invention sont soumises simultanément à une élévation de température et à une contrainte mécanique permettant leur transformation en objet.

La contrainte mécanique permettant la transformation de particules en objet peut par exemple comporter une compression dans un moule, un malaxage, une extrusion.

Cette méthode permet ainsi par l'application d'une température suffisante et d'une contrainte mécanique appropriée de mouler des objets à partir du matériau thermodurci. En particulier, elle permet de mouler des objets à partir du matériau à base de résine thermodurcie ayant atteint ou dépassé le point de gel.

Un autre avantage de l'invention est de permettre de fabriquer des matériaux en résines thermodurcissables, à partir des matières premières liquides, sous forme de pièces ou unités élémentaires à base de résine thermodurcie ayant atteint ou dépassé le point de gel : particules, granulés, billes, bâtonnets, plaques, feuilles, films, rubans, tiges, tubes etc...par tout procédé connu de l'homme du métier. Ces pièces élémentaires sont ensuite transformables sous l'action conjointe de la chaleur et d'une contrainte mécanique en des objets de la forme souhaitée : par exemple, des rubans peuvent par estampage être découpés en pièces plus petites de forme choisie, des feuilles peuvent être superposées et assemblées par compression. Ces pièces élémentaires à base de matériau thermodurcissable, notamment à base de résine époxy, sont plus facilement stockables, transportables et manipulables que les formulations liquides dont elles sont issues. En effet, l'étape de transformation des pièces selon l'invention peut être réalisée par l'utilisateur final sans équipement de chimie (pas de toxicité, ni de date de péremption, ni de COV, pas de pesée de réactifs).

L'invention a donc pour objet un procédé de fabrication d'au moins un objet à base de résine thermodurcissable, qui est un cas particulier du procédé de transformation déjà décrit, ce procédé comprenant :

a) l'utilisation comme matière première d'un matériau ou objet de l'invention sous forme d'une unité élémentaire ou d'un ensemble d'unités élémentaires,
b) l'application simultanée d'une contrainte mécanique et d'une élévation de température pour mettre en forme l'objet,
c) le refroidissement de l'objet résultant de l'étape b).

En particulier à l'étape a), le matériau ou objet de l'invention est avantageusement à base de résine thermodurcie ayant atteint ou dépassé le point de gel.

Un autre avantage de ce procédé est de permettre le recyclage du matériau après utilisation, des objets pouvant être reconditionnés sous forme d'unités ou pièces élémentaires puis à nouveau remises en forme suivant l'invention.

L'invention a donc pour objet un procédé de recyclage d'un objet en matériau de l'invention, ce procédé comprenant :

a) l'utilisation de l'objet comme matière première,

b) l'application d'une contrainte mécanique et éventuellement d'une élévation de température simultanée pour transformer cet objet en un ensemble d'unités élémentaires,

c) le refroidissement de cet ensemble d'unités élémentaires.

En particulier à l'étape a), le matériau ou objet de l'invention est avantageusement à base de résine thermodurcie ayant atteint ou dépassé le point de gel.

Par unités élémentaires, on entend des pièces qui ont une forme et/ou un aspect standardisé qui sont adaptés à leur transformation ultérieure en objet, comme par exemple : particules, granulés, billes, bâtonnets, plaques, feuilles, films, rubans, tiges, tubes etc.... Par ensemble d'unités élémentaires, on entend au moins deux unités élémentaire, mieux au moins trois, encore mieux au moins 5, préférentiellement au moins 10, encore plus préférentiellement au moins 100, avantageusement au moins $10^3$, encore plus avantageusement au moins $10^4$, de façon préférentielle au moins $10^5$.

Les matériaux et les procédés de l'invention permettent de remédier aux inconvénients des matériaux de l'art antérieur, qui sont la non transformabilité et la non recyclabilité des objets à base de résine époxy. Ils permettent notamment de transformer et de recycler autant de fois que souhaité l'objet à base de résine époxy. Le procédé permet aussi de fabriquer des résines époxy sous une forme solide, facile à stocker, à transporter et à manipuler, ces nouvelles formes de résine époxy, nommées unités élémentaires, étant utilisables directement pour la fabrication d'objets par application d'une étape de transformation classiquement utilisée pour les thermoplastiques. Enfin, ces résines et ces matériaux permettent de nouvelles applications des résines thermodurcissables par l'application de méthodes de transformation nouvelles pour ces résines et par la possibilité de programmer des transformations contrôlées de ces matériaux.

Les domaines d'application de ces matériaux sont tous ceux des résines thermodurcissables : les matériaux et composites pour l'automobile, pour la construction aéronautique, l'électronique, le sport, le bâtiment, l'imprimerie, l'emballage.

**Figures :**

Figure 1 : représentation schématique des réactions de transéestérification au sein du réseau de polymère

Figure 2 : Chromatogramme des produits contenus dans le milieu réactionnel issu de l'essai de transestérification

Figure 3 : Représentation graphique de la cinétique de transesterification dans l'essai de transestérification

Figure 4 : Courbes de fluages du matériau de l'exemple 1 réalisées à différentes températures (carrés: 160C°, ronds: 180°C, triangles: 200°C, losanges: 220°C) sous une contrainte de 1 MPa.

Figure 5 : Courbe de viscosité du matériau de l'exemple 1 en fonction de la température.

Figure 6a et 6b : photographies d'un ruban en matériau de l'invention observée en lumière polarisée auquel est appliquée une contrainte mécanique de type torsion suivant l'exemple 3

Figures 7a à 7c : représentation graphique d'après photographies des pièces formées à l'exemple 4

Figure 8 : représentation graphique d'après photographies des pièces formées à l'exemple 5

Figure 9 : Résultats des tests de traction réalisés sur les échantillons de l'exemple 6 (les échantillons sont nommés d'après le rapport anhydride/époxy) après réparation. La force maximale avant rupture (en N) est représentative de l'efficacité de la réparation, Il s'agit d'une moyenne sur cinq mesures, la barre d'erreur correspond à l'écart-type des mesures.

**Partie expérimentale :**

Exemple 1 : Synthèse et étude d'un réseau époxy anhydride selon l'invention en présence de 0,5 équivalent molaire d'anhydride par rapport aux groupements époxyde et 5% de catalyseur

- Synthèse du matériau :

Dans un bécher en téflon sont ajoutés : 10,69g de résine époxy DER 332 (DOW, Masse Epoxy Equivalente : 174 g/eq) et 0,81g d'acétylacétonate de Zinc (CAS 14024-63-6, MW=263,6 g/mol) correspondant à 0,05 atome-gramme de zinc par fonction époxy. Les réactifs sont mélangés tout en chauffant à l'aide d'un pistolet à air chaud (T≈180°C) jusqu'à solubilisation complète. 3,5 g d'anhydride glutarique (CAS 108-55-4, MW=114,1) sont ensuite ajoutés et mélangés jusqu'à solubilisation complète. Le mélange est coulé dans un moule de dimensions 100x100x1,4 mm entre deux feuilles de papier siliconé antiadhésif, puis mis à cuire sous presse à 140°C pendant 8h.

Une mesure de spectre infrarouge réalisée sur le matériau en fin de réaction met en évidence la disparition

complète des signaux de l'anhydride (1810 cm-1) et de l'époxy (915 cm-1). Sur l'échantillon après polymérisation, on enregistre la bande caractéristique des fonctions ester à 1735 $cm^{-1}$ et un large massif d'absorption 3200-3600 $cm^{-1}$) caractéristique des groupes hydroxyles.

- Propriétés du matériau

Le matériau présente en DSC une Tg de l'ordre de 70°C (□Cp = 0.4 $Jg^{-1}K^{-1}$), un module de conservation de 2,4 GPa à 40°C et de 15 MPa à 100°C. Des expériences de fluage à différentes températures comme représenté sur la figure 4 permettent de déterminer la viscosité du matériau. Ces mesures de viscosité qui aboutissent aux courbes de la figure 5 permettent à l'homme de l'art de déterminer précisément les conditions de mise en oeuvre du matériau à une température donnée.

Exemple 2: Transformation du matériau par façonnage à chaud:

- Montage

La plaque préparée dans l'exemple 1 est ramollie par chauffage à l'aide d'un pistolet à air chaud (T≈140°C) en veillant à éviter de surchauffer localement puis coupée en rubans à l'aide d'un massicot. Un ruban de dimensions 100 mm × 8 mm × 1.4 mm est saisi à ses deux extrémités par deux pinces de téflon. L'ensemble est placé sur un bâti construit de telle façon que 1°) l'une des pinces est solidaire du bâti, 2°) la seconde pince, faisant face à la première est placée au bout d'un axe mobile qui permet de la déplacer en translation et en rotation et 3°) le bâti peut être placé dans un four tubulaire transparent de type Büchi TO-50 muni d'une arrivée d'azote et d'un thermocouple chromel/alumel qui permet de connaître la température effective à proximité de l'échantillon.

Afin d'observer la biréfringence de l'échantillon au cours de l'expérience, le four est placé entre deux polaroïds croisés et éclairé par derrière à l'aide d'un négatoscope, les images sont enregistrées à l'aide d'un appareil photographique numérique.

La température de consigne est réglée à 200°C. Durant l'échauffement, la position de la pince mobile est ajustée pour que le ruban reste tendu malgré la dilatation. On constate que, après équilibration, la température qui règne effectivement près de l'échantillon est comprise 160 et 180°C. La pince est alors manoeuvrée de l'extérieur par l'opérateur pour déformer l'échantillon

Résultats

Par rotation de la pince mobile, on applique en l'espace de deux minutes une torsion de 3/4 de tour. A cette déformation, la biréfringence mécanique fait apparaître des zones très colorées à proximité de l'axe de l'échantillon et près des bords de l'échantillon et deux lignes neutres (obscures et peu colorées) à peu près à mi-chemin entre l'axe de l'échantillon et les bords. Au bout de 40 minutes, on constate, par comparaison des photos, que la ligne neutre s'élargit et que les couleurs disparaissent, laissant place à une figure de biréfringence dans les tons gris. On applique alors pas à pas une déformation plus importante: 1 tour puis 1,5 tour puis deux tours en laissant reposer chaque fois au moins 20 minutes. A chaque nouvelle déformation, on voit réapparaître les couleurs de biréfringence. Ces couleurs redisparaissent ensuite de la même manière que précédemment. Au bout de 40 minutes d'attente après application de la plus grande déformation (2 tours), bien que la biréfringence n'ait pas totalement disparu, la pince mobile est relâchée. On constate que l'échantillon ne reprend pas sa forme initiale de ruban plan mais conserve une déformation hélicoïdale avec une torsion résiduelle d'environ 1,5 tour.

Exemple comparatif 1 à 0,1% de catalyseur:

Un échantillon comparatif est préparé en utilisant le même protocole que dans l'exemple 1 mais en utilisant une masse de catalyseur moindre: 0,016g d'acétylacétonate de Zinc soit 0,001 atome-gramme de zinc par fonction époxy. On tente de transformer cet échantillon de la même façon que dans l'exemple 2. Ainsi on commence par appliquer une déformation de 3/4 de tour. L'échantillon ainsi déformé est maintenu à 160-180°C. Au bout de 40 minutes, on constate que l'image de biréfringence est toujours vivement colorée. On tente alors d'appliquer une déformation de 1 tour, comme dans l'exemple 1 mais l'échantillon se casse aussitôt à cette déformation.

Exemple 3: Réseau époxy-anhydride selon l'invention avec 10% de catalyseur:

On procède comme dans l'exemple 1 mais avec une quantité double de catalyseur. Un échantillon de dimensions 100 mm × 8 mm × 1.4 mm est manipulé comme dans l'exemple 2. On constate dans ce cas que les couleurs de

biréfringence induites par une déformation hélicoïdale (figure 6a) disparaissent en l'espace de 15 minutes, laissant place à une figure de biréfringence dans les tons gris (Figure 6b). En procédant par étapes et en laissant relaxer au moins 10 minutes entre chaque étape et 40 minutes après l'étape finale on impose successivement des torsions de 1 tour, 1,5 tour, 2 tours, 2,25 tours, 2,5 tours, 2,75 tours puis 3 tours. Après refroidissement l'échantillon présente une déformation de 3 tours, Après immersion dans l'eau bouillante pendant 2 minutes la torsion demeure supérieure à 2,95 tours.

Exemple 4 : Réseau époxy-anhydride selon l'invention avec 10% de catalyseur

- Imposition de deux déformations successives de nature différente: torsion puis flexion.

A partir du même matériau que dans l'exemple 3, on prépare un ruban de dimensions 100 mm × 4 mm × 1.4 mm. L'échantillon est d'abord soumis à une torsion de 5 tours de la même façon que dans l'exemple 3. La torsade obtenue (figure 7a) est refroidie jusqu'à la température ambiante puis fixée tangentiellement sur un cylindre de téflon de diamètre 2,5 cm. Ce cylindre est placé sur un axe perpendiculaire à l'axe du four décrit dans l'exemple 2. L'autre extrémité de la torsade est lestée par un poids de 7 grammes. L'ensemble est placé dans le four et chauffé comme dans l'exemple 2. On applique alors une déformation de flexion en faisant tourner le cylindre sur son axe. Après refroidissement, et immersion dans l'eau bouillante, l'objet obtenu est un anneau ouvert dont la section est une torsade figure 7b.

- Réalisation d'un objet de forme programmable:

L'objet précédent est ramolli à l'aide d'un pistolet à air chaud, et déformé de façon à former un anneau fermé tel que présenté sur la figure 7c puis refroidi à température ambiante. L'objet obtenu, tant qu'il est maintenu à température ambiante conserve la forme de la figure 7c. Cependant, lorsqu'on le plonge dans l'eau bouillante, il retrouve la forme de la figure 7b.

Cet exemple montre qu'il est possible d'appliquer à l'objet initial (un ruban) plusieurs déformations successives, puis de redonner à cet objet une forme prévue par avance par simple élévation de température.

Exemple 5 : recyclage du matériau selon l'invention par broyage.

Environ 3g de matériau préparé selon l'exemple 3 sont réduits en poudre de granulométrie <0,5 mm à l'aide d'une broyeuse de marque FRITSCH, modèle PULVERISETTE 14 opérant à une vitesse de 10000 tours/s. La poudre obtenue est pressée à l'aide d'une presse chauffante dans un moule circulaire de diamètre 20 mm et d'épaisseur 1,5 mm, en opérant avec une pression de 5 tonnes à une température de 250°C et pendant une durée de 30 secondes. Le moule est sorti de la presse et les échantillons sont démoulés alors qu'ils sont encore chauds. Les échantillons ainsi moulés gardent les dimensions du moule, sont transparents et ont une excellente cohésion (figure 8).

Exemple 6 : Réparation d'un objet à base de résine époxy selon l'invention

On réalise la synthèse de quatre matériaux selon l'invention en suivant le protocole de l'exemple 1 mais avec un rapport variable des fonctions anhydrides par rapport aux fonctions époxy comme indiqué dans le tableau 2 suivant:

Tableau 2

| | DGEBA DER 332 | Anhydride glutarique | Zn(acac)$_2$, 2 $H_2O$ | Rapport anhydride/époxy |
|---|---|---|---|---|
| Synthèse 1 | 9,1g (52,1 mmol) | 5,94g (52,1 mmol) | 0,69g (2,6 mmol) | 1 |
| Synthèse 2 | 9,6g (55,1 mmol) | 4,71g (41,3 mmol) | 0,73g (2,8 mmol) | 0,75 |
| Synthèse 3 | 10,4g (60,0 mmol) | 4,56g (40,0 mmol) | 0,79g (3,0 mmol) | 0,66 |
| Synthèse 4 | 110,7g (61,4 mmol) | 3,51g (30,7 mmol) | 0,81g (3,1 mmol) | 0,5 |

De chaque matériau, on découpe un ruban rectangulaire de dimensions 50 mm x 5 mm x 1,4 mm. Le ruban est rompu par le milieu et les deux fragments sont placés l'un sur l'autre, se recouvrant sur 15 mm de longueur puis comprimés dans une pince de Mohr dans une géométrie analogue à la norme ASTM D3983. De façon à contrôler la pression appliquée, la vis centrale de diamètre 6 mm et de pas 1mm est remplacée par une vis à tête hexagonale de même dimension à laquelle on applique un couple de 70 (±10) N/cm à l'aide d'un tournevis dynamométrique. L'assemblage est mis à l'étuve à 150°C pendant 2 heures.

L'échantillon est ensuite étiré à température ambiante dans une machine de traction INSTRON avec une vitesse

de 0,1 mm par minute. On mesure la force maximale soutenue par l'assemblage, ainsi que l'élongation à la rupture. Cette méthode permet de quantifier l'adhésion entre les deux échantillons et d'évaluer la réparation de l'assemblage. Les résultats sont présentés sur la figure 9. Cet exemple montre la possibilité de réparer une pièce en résine thermodurcie selon l'invention ou d'assembler deux pièces en matériau selon l'invention. Cet exemple montre aussi l'amélioration des propriétés lorsque l'on augmente le nombre de fonctions hydroxy générées par la réaction Epoxy + anhydride, ce nombre étant d'autant plus élevé que le rapport anhydride/époxy est faible.

## Revendications

1. Composition de résine thermodurcissable, transformable à chaud après durcissement, cette composition résultant de la mise en contact :

   D'une composition comprenant au moins un précurseur de résine thermodurcissable, ce précurseur de résine thermodurcissable comportant des fonctions hydroxyle et/ou des groupements époxy, et éventuellement des fonctions ester,
   Avec une composition comprenant au moins un durcisseur choisi parmi les anhydrides d'acide,
   En présence d'au moins un catalyseur de transestérification au sens donné en page 14 ligne 1 à page 15 ligne 29 de la description, dont la quantité totale en mole est entre 5 et 25% de la quantité molaire totale d'hydroxyle et d'époxy contenus dans le précurseur de résine thermodurcissable, le catalyseur étant solubilisé dans la composition comprenant le précurseur de résine thermodurcissable ou dans la composition comprenant le durcisseur,
   La quantité de durcisseur étant choisie de telle sorte que la résine soit sous forme d'un réseau et :

   $N_O$ désignant le nombre de moles de fonctions hydroxyle dans le précurseur,
   $N_x$ désignant le nombre de moles de groupements époxy dans le précurseur,
   $N_A$ désignant le nombre de moles de fonctions anhydride du durcisseur capables de former une liaison avec une fonction hydroxyle ou avec un groupement époxy du précurseur de polymère thermodurcissable :

$$2N_A < N_O + 2N_x$$

2. Composition selon la revendication 1, dans laquelle

$$2N_A > N_x$$

3. Composition selon la revendication 1 ou la revendication 2 dans laquelle le précurseur de résine thermodurcissable est un précurseur de résine époxy.

4. Composition selon la revendication 2 ou la revendication 3, dans laquelle le précurseur de résine thermodurcissable est choisi de telle sorte que :

   $<n_X>$ étant la moyenne en nombre du nombre de fonctions époxy par précurseur
   .$<n_O>$ étant la moyenne en nombre du nombre de fonctions hydroxyle par précurseur

$$2 < 2<n_X>+<n_O>$$

5. Composition selon l'une quelconque des revendications 2 à 4, dans laquelle le précurseur de résine époxy est un diglycidyl éther de bisphénol A ou une résine Novolac.

6. Composition selon l'une quelconque des revendications 1 à 5, dans laquelle le durcisseur est choisi parmi : l'anhydride phtalique, l'anhydride méthyl-nadique, l'anhydride hexahydrophtalique, l'anhydride dodécenyl succinique, l'anhydride glutarique, l'anhydride succinique, l'anhydride maléique, l'anhydride chlorendique, l'anhydride nadique, l'anhydride tetrachlorophtalique, le dianhydride, pyromellitique, le dianhydride d'acide 1,2,3,4 cyclopentanetétracarboxylique, les polyanhydrides d'acides aliphatiques tels que le polyanhydride polyazélaique, le polyanhydride

polysébacique, de préférence choisi parmi l'anhydride glutarique, l'anhydride phtalique, l'anhydride hexahydrophtalique.

**7.** Composition selon l'une quelconque des revendications 1 à 6, dans laquelle le catalyseur est choisi parmi les sels métalliques de zinc, d'étain, de magnésium, de cobalt, de calcium, de titane, et de zirconium, de préférence le catalyseur est l'acétylacétonate de zinc.

**8.** Matériau résultant du durcissement de la résine thermodurcissable selon l'une quelconque des revendications 1 à 7, qui se **caractérise par** un module de conservation compris entre $5 \times 10^5$ et $5 \times 10^7$ Pa au dessus de la température de transition vitreuse Tg de la résine.

**9.** Matériau résultant du durcissement de la résine thermodurcissable selon l'une quelconque des revendications 1 à 7, qui présente une viscosité comprise entre $10^5$ et $10^{10}$ Pa.s à des températures comprises entre 150 et 300°C.

**10.** Composition de matériau thermodurcissable comprenant au moins une résine thermodurcissable selon l'une quelconque des revendications 1 à 7 et au moins un composant choisi parmi : les polymères, les pigments, les colorants, les charges, les plastifiants, les fibres, les agents retardateurs de flamme, les agents anti oxydants, les lubrifiants, le bois, le verre, les métaux.

**11.** Kit pour la préparation d'une résine thermodurcissable selon l'une quelconque des revendications 1 à 7 ou d'un matériau selon la revendication 10, ce kit comprenant au moins une première composition comprenant un précurseur de résine thermodurcissable, ce précurseur de résine thermodurcissable comportant des fonctions hydroxyle et/ou des groupements époxy, et éventuellement des fonctions ester, au moins une seconde composition comprenant un durcisseur choisi parmi les anhydrides d'acide et au moins un catalyseur de transestérification, le catalyseur pouvant éventuellement être stocké dans le même compartiment que le précurseur ou que le durcisseur, la première et la seconde composition étant dans un conditionnement adapté pour empêcher la réaction de réticulation entre le précurseur et le durcisseur de se produire sans intervention d'un opérateur.

**12.** Procédé de fabrication d'un objet à base d'une composition selon l'une quelconque des revendications 1 à 7, ce procédé comprenant :

a) la mise en contact d'une première composition comprenant au moins un précurseur de résine thermodurcissable, avec une seconde composition comprenant au moins un durcisseur choisi parmi les anhydrides d'acide, en présence d'au moins un catalyseur de transestérification,
b) la mise en forme de la composition issue de l'étape a)
c) l'application d'une énergie permettant le durcissement de la résine
d) le refroidissement de la résine durcie.

**13.** Objet à base de résine thermodurcissable susceptible d'être obtenu par le procédé selon la revendication 12.

**14.** Procédé de transformation d'au moins un objet selon la revendication 13, ce procédé comprenant : l'application à l'objet d'une contrainte mécanique à une température (T) supérieure à la température ambiante, de préférence supérieure à la température de transition vitreuse Tg du matériau composant l'objet.

**15.** Procédé de fabrication d'un objet à transformation postérieure programmée, ce procédé comprenant l'application à un premier objet selon la revendication 13 d'une contrainte mécanique à une température (T) supérieure à la température ambiante, de préférence supérieure à la température de transition vitreuse Tg du matériau composant le premier objet, puis son refroidissement, la température T et sa durée d'application étant contrôlées de telle sorte qu'une contrainte mécanique interne permettant la transformation ultérieure soit conservée dans l'objet après refroidissement.

**16.** Procédé de recyclage d'un objet selon la revendication 13, ce procédé comprenant :

a) une réduction de l'objet en particules par application d'un broyage mécanique,
b) la mise en oeuvre des particules de l'étape a) dans un procédé de transformation selon la revendication 14.

**17.** Procédé de recyclage d'un objet selon la revendication 13, ce procédé comprenant :

a) l'utilisation de l'objet comme matière première,
b) l'application d'une contrainte mécanique et éventuellement d'une élévation de température simultanée pour transformer cet objet en un ensemble d'unités élémentaires,
c) le refroidissement de l'ensemble d'unités élémentaires.

**18.** Utilisation d'une composition ou d'un matériau selon l'une des revendications 1 à 10 ou d'un objet selon la revendication 13 comme matériaux et composites pour l'automobile, pour la construction aéronautique, l'électronique, le sport, le bâtiment, l'imprimerie, l'emballage.

**Patentansprüche**

**1.** Wärmehärtende Harzzusammensetzung, die nach der Härtung warmumformbar ist, wobei die Zusammensetzung erhalten wird, indem man Folgendes miteinander in Kontakt bringt:

eine Zusammensetzung, die mindestens eine Vorstufe eines wärmehärtenden Harzes umfasst, wobei die Vorstufe des wärmehärtenden Harzes Hydroxylfunktionen und/oder Epoxygruppen und gegebenenfalls Esterfunktionen trägt,
mit einer Zusammensetzung, die mindestens ein Härtungsmittel, das aus Säureanhydriden ausgewählt wird, umfasst,
in Gegenwart mindestens eines Umesterungskatalysators in dem auf Seite 14, Zeile 1 bis Seite 15, Zeile 29 der Beschreibung angegebenen Sinne, dessen Gesamtmenge in mol zwischen 5 und 25% der gesamten Menge an Molen von Hydroxyl und Epoxy, die in der Vorstufe des wärmehärtenden Harzes enthalten sind, beträgt, wobei der Katalysator in der die Vorstufe des wärmehärtenden Harzes umfassenden Zusammensetzung oder in der das Härtungsmittel umfassenden Zusammensetzung solubilisiert ist,
wobei die Menge an Härtungsmittel derart ausgewählt wird, dass das Harz die Form eines Netzes hat, und:

$N_O$ die Anzahl der Mole an Hydroxylfunktionen in der Vorstufe angibt,
$N_x$ die Anzahl der Mole an Epoxygruppen in der Vorstufe angibt,
$N_A$ die Anzahl der Mole an Anhydridfunktionen des Härtungsmittels angibt, die eine Verbindung mit einer Hydroxylfunktion oder mit einer Epoxygruppe der Vorstufe des wärmehärtenden Polymers eingehen können:

$$2N_A < N_O + 2N_x.$$

**2.** Zusammensetzung nach Anspruch 1, wobei

$$2N_A > N_x.$$

**3.** Zusammensetzung nach Anspruch 1 oder Anspruch 2, wobei die Vorstufe des wärmehärtenden Harzes eine Epoxyharzvorstufe ist.

**4.** Zusammensetzung nach Anspruch 2 oder Anspruch 3, wobei die Vorstufe des wärmehärtenden Harzes derart ausgewählt wird, dass:

wobei $<n_x>$ das Zahlenmittel der Anzahl an Epoxyfunktionen pro Vorstufe ist,
$<n_o>$ das Zahlenmittel der Anzahl an Hydroxylfunktionen pro Vorstufe ist,

$$2 < 2<n_x>+<n_O>.$$

**5.** Zusammensetzung nach einem der Ansprüche 2 bis 4, wobei die Epoxyharzvorstufe ein Bisphenol-A-digycidylether oder ein Novolakharz ist.

**6.** Zusammensetzung nach einem der Ansprüche 1 bis 5, wobei das Härtungsmittel aus Phthalsäureanhydrid, Methylnadicsäureanhydrid, Hexahydrophthalsäureanhydrid, Dodecenylbernsteinsäureanhydrid, Glutarsäureanhydrid, Bernsteinsäureanhydrid, Maleinsäureanhydrid, Chlorendicsäureanhydrid, Nadicsäureanhydrid, Tetrachlorphthalsäureanhydrid, Pyromellitsäuredianhydrid, 1,2,3,4-Cyclopentantetracarbonsäuredianhydrid, Polyanhydriden von aliphatischen Säuren wie Polyacelainsäurepolyanhydrid und Polysebacinsäurepolyanhydrid ausgewählt wird und vorzugsweise aus Glutarsäureanhydrid, Phthalsäureanhydrid und Hexahydrophthalsäureanhydrid ausgewählt wird.

**7.** Zusammensetzung nach einem der Ansprüche 1 bis 6, wobei der Katalysator aus Zink-, Zinn-, Magnesium-, Kobalt-, Calcium-, Titan- und Zirkonmetallsalzen ausgewählt wird und es sich bei dem Katalysator vorzugsweise um Zinkacetylacetonat handelt.

**8.** Material, das sich durch die Härtung des wärmehärtenden Harzes nach einem der Ansprüche 1 bis 7 ergibt, das durch ein Speichermodul zwischen $5x10^5$ und $5x10^7$ Pa oberhalb der Glasübergangstemperatur Tg des Harzes gekennzeichnet ist.

**9.** Material, das sich durch die Härtung des wärmehärtenden Harzes nach einem der Ansprüche 1 bis 7 ergibt, das eine Viskosität zwischen $10^5$ und $10^{10}$ Pa.s bei Temperaturen zwischen 150 und 300°C aufweist.

**10.** Wärmehärtende Materialzusammensetzung, die mindestens ein wärmehärtendes Harz nach einem der Ansprüche 1 bis 7 und mindestens einen aus: Polymeren, Pigmenten, Farbstoffen, Füllstoffen, Weichmachern, Fasern, Flammschutzmitteln, Antioxidationsmitteln, Schmierstoffen, Holz, Glas, Metallen ausgewählten Bestandteil umfasst.

**11.** Satz zur Herstellung eines wärmehärtenden Harzes nach einem der Ansprüche 1 bis 7 oder eines Materials nach Anspruch 10, wobei der Satz Folgendes umfasst: mindestens eine erste Zusammensetzung, die eine Vorstufe eines wärmehärtenden Harzes umfasst, wobei diese Vorstufe eines wärmehärtenden Harzes Hydroxylfunktionen und/oder Epoxygruppen und gegebenenfalls Esterfunktionen trägt, mindestens eine zweite Zusammensetzung, die ein Härtungsmittel, das aus Säureanhydriden ausgewählt wird, und mindestens einen Umesterungskatalysator umfasst, wobei der Katalysator gegebenenfalls im selben Kompartiment wie die Vorstufe oder wie das Härtungsmittel aufbewahrt werden kann, wobei die erste und die zweite Zusammensetzung sich in einer Verpackung befinden, die dafür ausgelegt ist zu verhindern, dass die Vernetzungsreaktion zwischen der Vorstufe und dem Härtungsmittel ohne Eingriff eines Benutzers abläuft.

**12.** Verfahren zur Herstellung eines Gegenstands auf der Basis einer Zusammensetzung nach einem der Ansprüche 1 bis 7, wobei das Verfahren Folgendes umfasst:

a) das Inkontaktbringen einer ersten Zusammensetzung, die mindestens eine Vorstufe eines wärmehärtenden Harzes umfasst, mit einer zweiten Zusammensetzung, die mindestens ein Härtungsmittel umfasst, das aus Säureanhydriden ausgewählt ist, in Gegenwart mindestens eines Umesterungskatalysators,
b) das Formen der nach Schritt a) erhaltenen Zusammensetzung
c) das Anwenden einer Energie, welche das Härten des Harzes gestattet
d) das Abkühlen des gehärteten Harzes.

**13.** Gegenstand auf der Basis von wärmehärtendem Harz, der durch das Verfahren nach Anspruch 12 erhalten werden kann.

**14.** Verfahren zur Umformung mindestens eines Gegenstands nach Anspruch 13, wobei das Verfahren Folgendes umfasst: Anwenden einer mechanischen Spannung auf den Gegenstand bei einer Temperatur (T), die höher ist als Umgebungstemperatur, vorzugsweise höher als die Glasübergangstemperatur Tg des Materials, das den Gegenstand ausmacht.

**15.** Verfahren zur Herstellung eines Gegenstands für eine spätere geplante Umformung, wobei das Verfahren Folgendes umfasst: Anwenden einer mechanischen Spannung auf einen ersten Gegenstand nach Anspruch 13 bei einer Temperatur (T), die höher ist als Umgebungstemperatur, vorzugsweise höher als die Glasübergangstemperatur Tg des Materials, das den ersten Gegenstand ausmacht, und anschließendes Abkühlen des Gegenstands, wobei die Temperatur T und deren Anwendungsdauer so gesteuert werden, dass in dem Gegenstand nach dem Abkühlen eine innere mechanische Spannung, die die nachfolgende Umformung erlaubt, konserviert wird.

**16.** Recyclingverfahren für einen Gegenstand nach Anspruch 13, wobei das Verfahren Folgendes umfasst:

a) eine Zerkleinerung des Gegenstands in Teilchen durch Anwenden von mechanischer Zerkleinerung,
b) Einsetzen der Teilchen aus Schritt a) bei einem Umformungsverfahren nach Anspruch 14.

**17.** Recyclingverfahren für einen Gegenstand nach Anspruch 13, wobei das Verfahren Folgendes umfasst:

a) Verwendung des Gegenstands als Rohstoff,
b) Anwendung einer mechanischen Beanspruchung und gegebenenfalls einer gleichzeitigen Temperaturerhöhung, um den Gegenstand in eine Ansammlung von kleinsten Einheiten umzuwandeln,
c) Abkühlen der Ansammlung von kleinsten Einheiten.

**18.** Verwendung einer Zusammensetzung oder eines Materials nach einem der Ansprüche 1 bis 10 oder eines Gegenstands nach Anspruch 13 als Materialien und Verbundwerkstoffe für Automobile, für den Flugzeugbau, für die Elektronik, den Sport, das Bauwesen, das Drucken, Verpackungen.

## Claims

**1.** Thermosetting resin composition, which is hot-transformable after hardening, this composition resulting from placing in contact:

a composition comprising at least one thermosetting resin precursor, this thermosetting resin precursor comprising hydroxyl functions and/or epoxy groups, and optionally ester functions,
with a composition comprising at least one hardener chosen from acid anhydrides,
in the presence of at least one transesterification catalyst within the meaning given in page 14 line 1 to page 15 line 29 of the description, whose total molar amount is between 5% and 25% of the total molar amount of hydroxyl and epoxy contained in the thermosetting resin precursor, the catalyst being dissolved in the composition comprising the thermosetting resin precursor or in the composition comprising the hardener,
the amount of hardener being chosen such that the resin is in the form of a network, and:

$N_o$ denoting the number of moles of hydroxyl functions in the precursor,
$N_x$ denoting the number of moles of epoxy groups in the precursor,
$N_A$ denoting the number of moles of anhydride functions of the hardener that are capable of forming a bond with a hydroxyl function or with an epoxy group of the thermosetting polymer precursor:

$$2N_A < N_O + 2N_x$$

**2.** Composition according to Claim 1, in which

$$2N_A > N_x$$

**3.** Composition according to Claim 1 or Claim 2, in which the thermosetting resin precursor is an epoxy resin precursor.

**4.** Composition according to Claim 2 or Claim 3, in which the thermosetting resin precursor is chosen such that:

$<n_x>$ being the numerical average of the number of epoxy functions per precursor
$<n_o>$ being the numerical average of the number of hydroxyl functions per precursor
$2 < 2<n_x>+<n_o>$

**5.** Composition according to any one of Claims 2 to 4, in which the epoxy resin precursor is a bisphenol A diglycidyl ether or a novolac resin.

**6.** Composition according to any one of Claims 1 to 5, in which the hardener is chosen from: phthalic anhydride, methylnadic anhydride, hexahydrophthalic anhydride, dodecenyl succinic anhydride, glutaric anhydride, succinic anhydride, maleic anhydride, chlorendic anhydride, nadic anhydride, tetrachlorophthalic anhydride, pyromellitic dianhydride, 1,2,3,4-cyclopentanetetracarboxylic acid dianhydride, aliphatic acid polyanhydrides such as polyazelaic

polyanhydride, polysebacic polyanhydride, preferably chosen from glutaric anhydride, phthalic anhydride, hexahydrophthalic anhydride.

7. Composition according to any one of Claims 1 to 6, in which the catalyst is chosen from metal salts of zinc, tin, magnesium, cobalt, calcium, titanium and zirconium, preferably the catalyst is zinc acetylacetonate.

8. Material resulting from the curing of the thermosetting resin according to any one of Claims 1 to 7, which is **characterized by** a storage modulus of between $5x10^5$ and $5x10^7$ Pa above the glass transition temperature Tg of the resin.

9. Material resulting from the curing of the thermosetting resin according to any one of Claims 1 to 7, which has a viscosity of between $10^5$ and $10^{10}$ Pa.s at temperatures of between 150 and 300°C.

10. Thermosetting material composition comprising at least one thermosetting resin according to any one of Claims 1 to 7 and at least one component chosen from: polymers, pigments, dyes, fillers, plasticizers, fibres, flame retardants, antioxidants, lubricants, wood, glass, metals.

11. Kit for preparing a thermosetting resin according to any one of Claims 1 to 7 or a material according to Claim 10, this kit comprising at least one first composition comprising a thermosetting resin precursor, this thermosetting resin precursor comprising hydroxyl functions and/or epoxy groups, and optionally ester functions, at least one second composition comprising a hardener chosen from acid anhydrides and at least one transesterification catalyst, it being possible for the catalyst to optionally be stored in the same compartment as the precursor or the hardener, the first and the second composition being in conditioning suitable for preventing the crosslinking reaction between the precursor and the hardener from taking place without intervention of an operator.

12. Process for manufacturing an article based on a composition according to any one of Claims 1 to 7, this process comprising:

    a) the placing in contact of a first composition comprising at least one thermosetting resin precursor with a second composition comprising at least one hardener chosen from acid anhydrides, in the presence of at least one transesterification catalyst,
    b) the forming of the composition obtained from step a),
    c) the application of energy for hardening the resin,
    d) cooling of the hardened resin.

13. Article based on thermosetting resin that may be obtained via the process according to Claim 12.

14. Process for transforming at least one article according to Claim 13, this process comprising: the application to the article of a mechanical constraint at a temperature (T) above room temperature, preferably above the glass transition temperature Tg of the material of which the article is composed.

15. Process for manufacturing an object with programmed post-transformation, this process comprising the application to a first object according to claim 13 of a mechanical stress at a temperature (T) above room temperature, preferably above the glass transition temperature Tg of the material of which the first object is composed, followed by cooling it, the temperature T and its application time being controlled such that an internal mechanical stress allowing the subsequent transformation is conserved in the object after cooling.

16. Process for recycling an article according to Claim 13, this process comprising:

    a) reduction of the article into particles by application of mechanical grinding,
    b) use of the particles from step a) in a transformation process according to Claim 14.

17. Process for recycling an article according to Claim 13, this process comprising:

    a) the use of the article as starting material,
    b) the application of a mechanical constraint and optionally of a simultaneous increase in temperature to transform this article into an assembly of elemental units,
    c) cooling of the assembly of elemental units.

**18.** Use of a composition or of a material according to one of Claims 1 to 10 or of an article according to Claim 13 as materials and composites for motor vehicles, for aeronautical construction, electronics, sport, construction, printing or packaging.

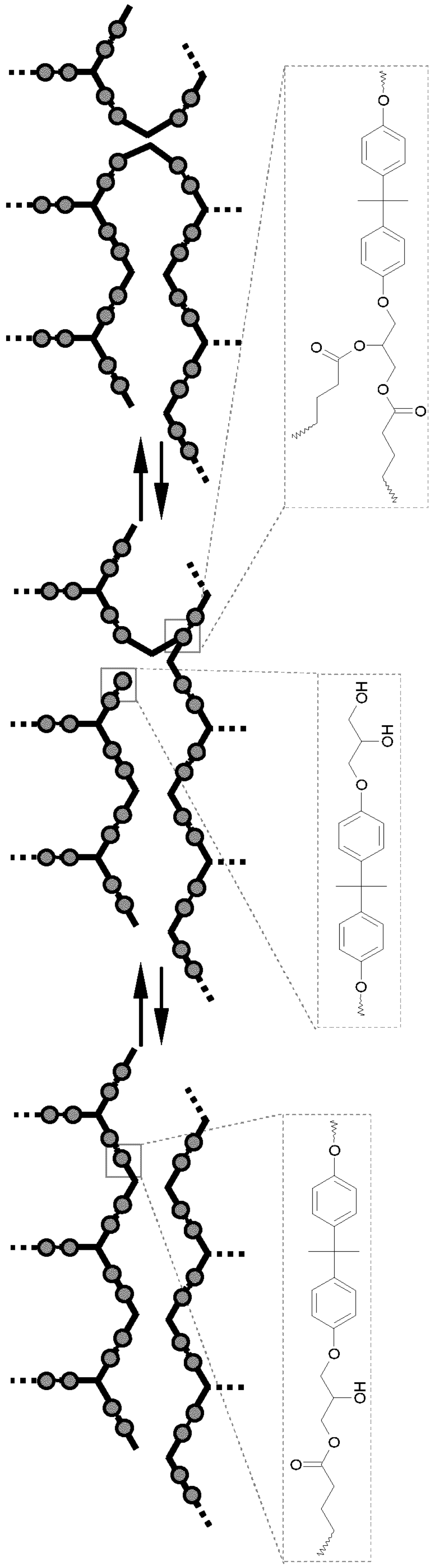

Figure 1

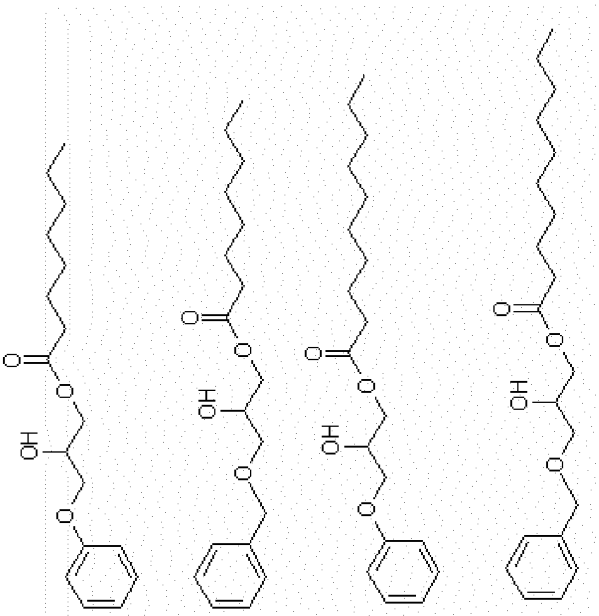

E3

E1

E2

E4

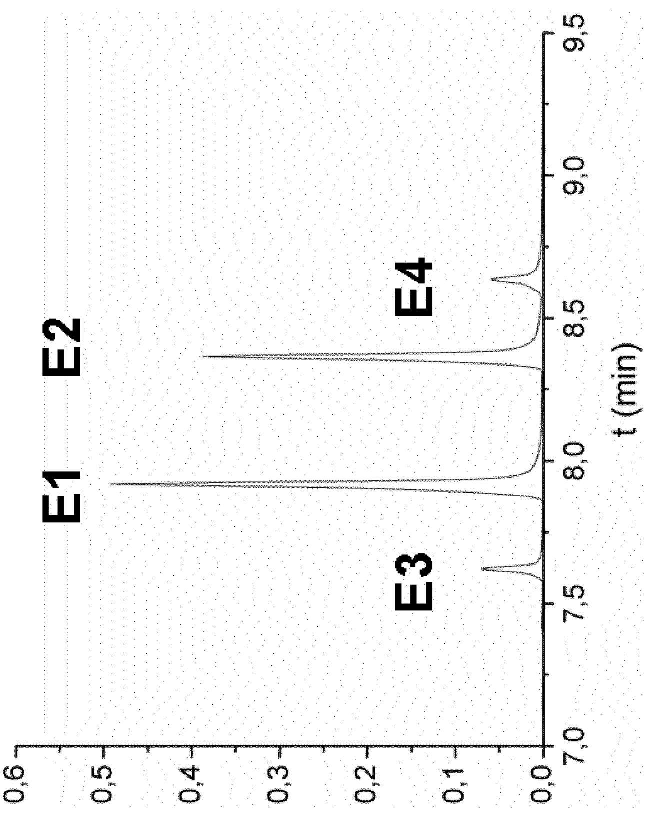


Figure 2

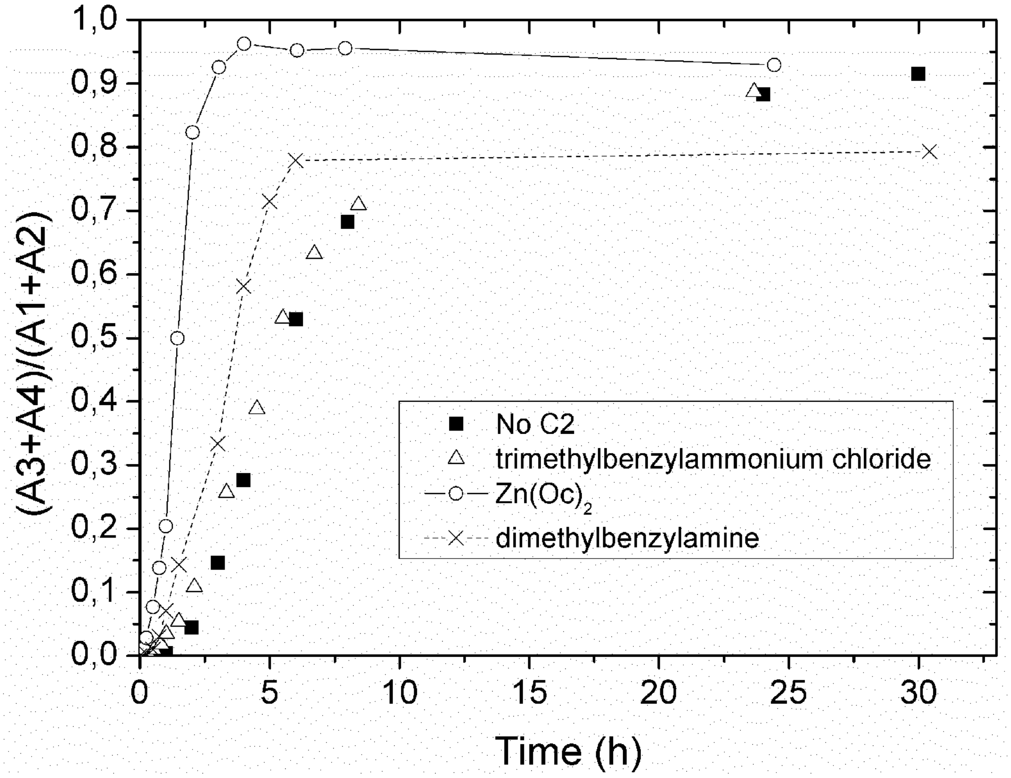
1,0
0,9
0,8
0,7
0,6
0,5
0,4
0,3
0,2
0,1
0,0
(A3+A4)/(A1+A2)
0
5
10
15
20
25
30
Time (h)
No C2
trimethylbenzylammonium chloride
Zn(Oc)2
dimethylbenzylamine

Figure 3

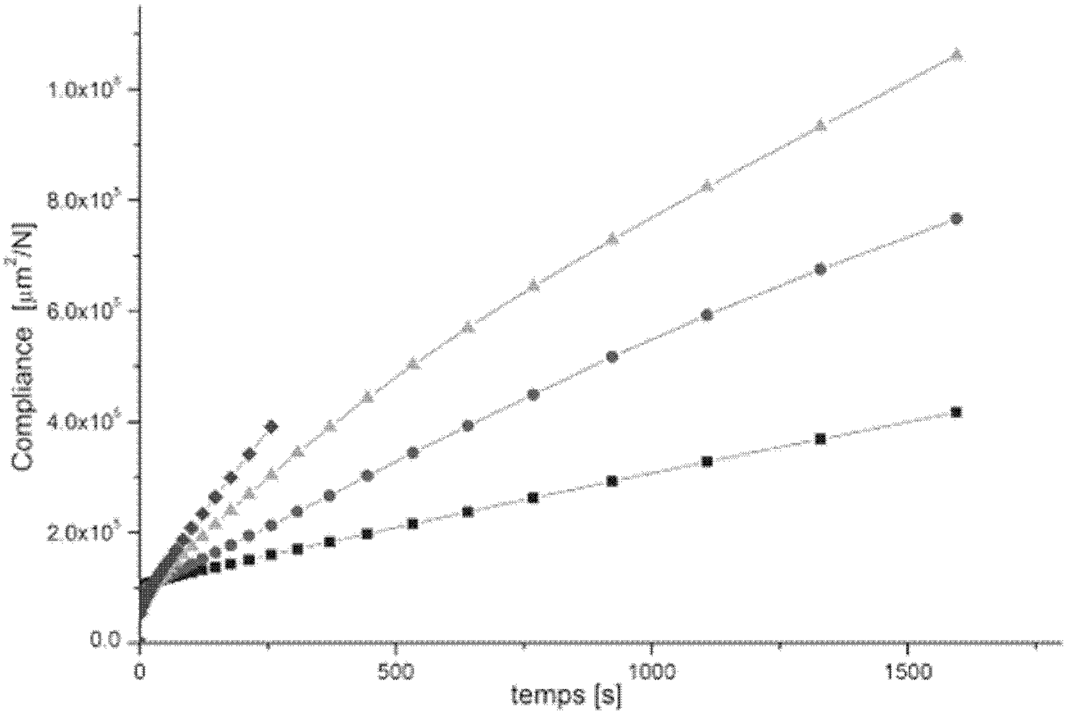
Compliance [µm²/N]
1.0x10⁵
8.0x10⁵
6.0x10⁵
4.0x10⁵
2.0x10⁵
0.0
0
500
1000
1500
temps [s]

Figure 4

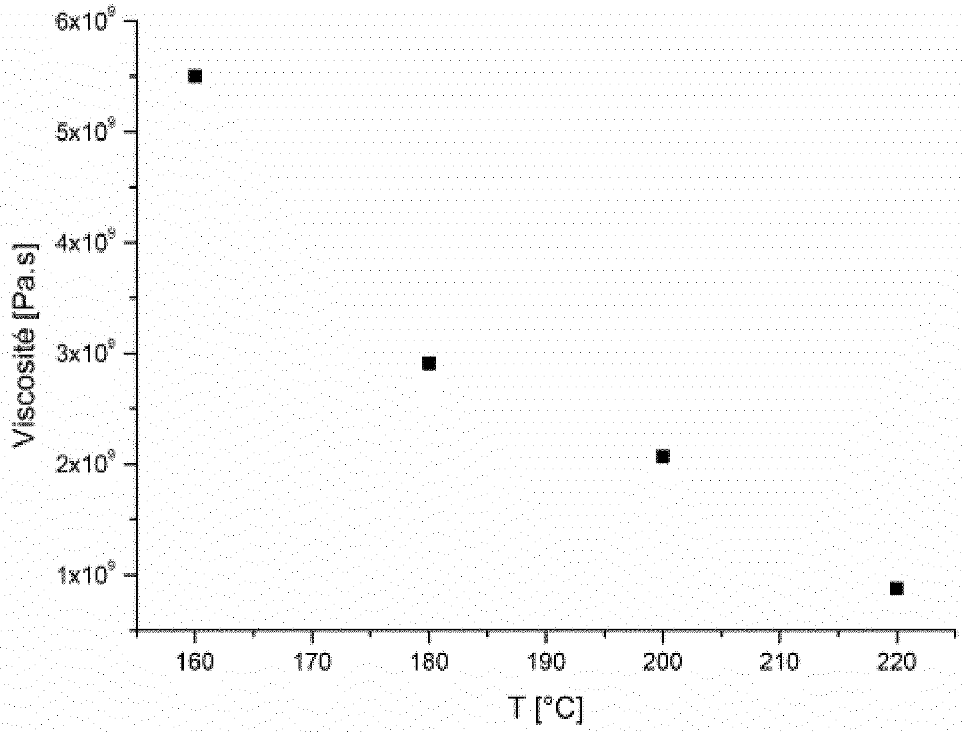
6x10⁹
5x10⁹
4x10⁹
3x10⁹
2x10⁹
1x10⁹
Viscosité [Pa.s]
160
170
180
190
200
210
220
T [°C]

Figure 5

6a

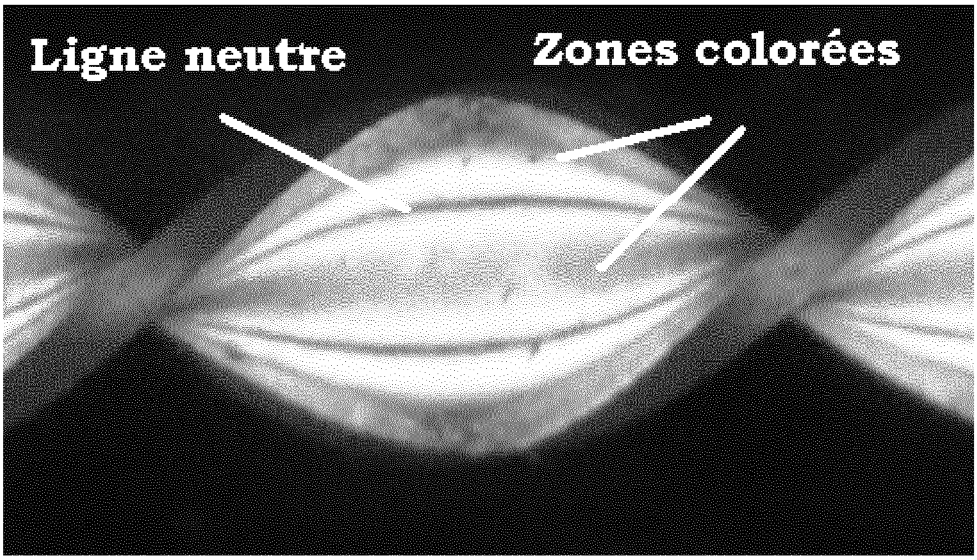


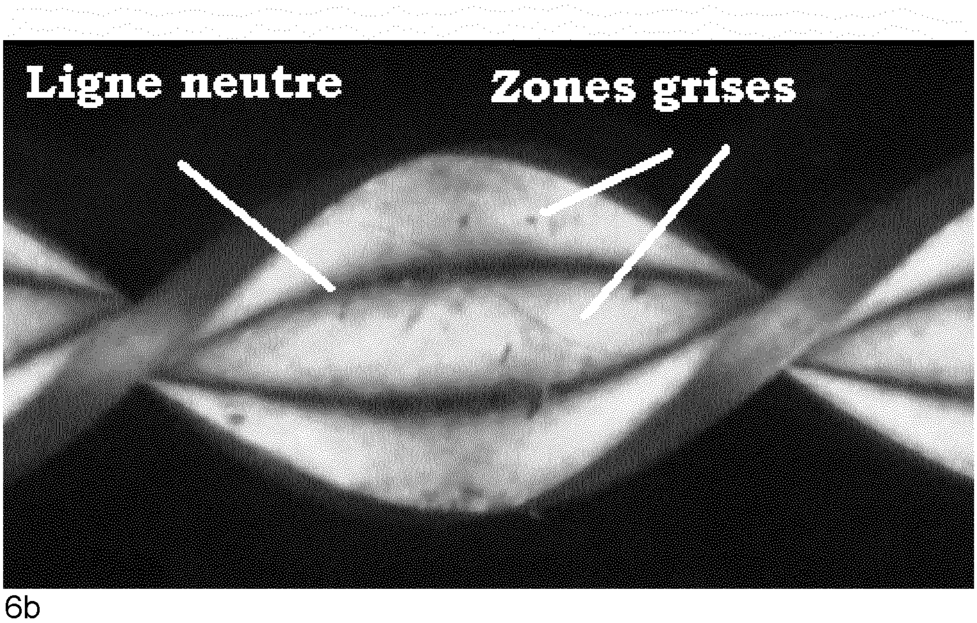


6b

Figure 6

fig 7a

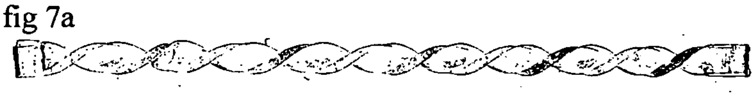

fig 7b

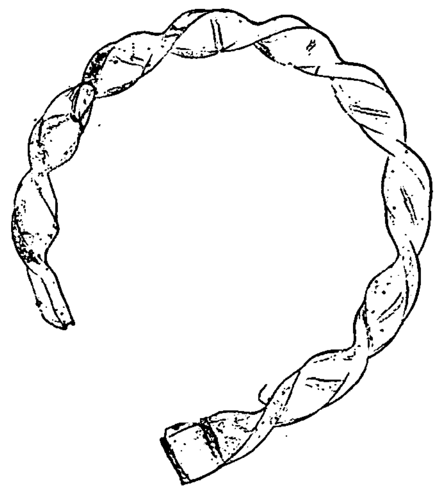

fig 7c

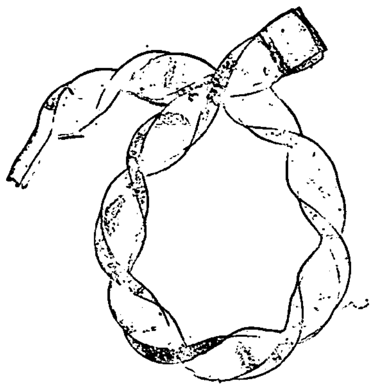

Figure 7

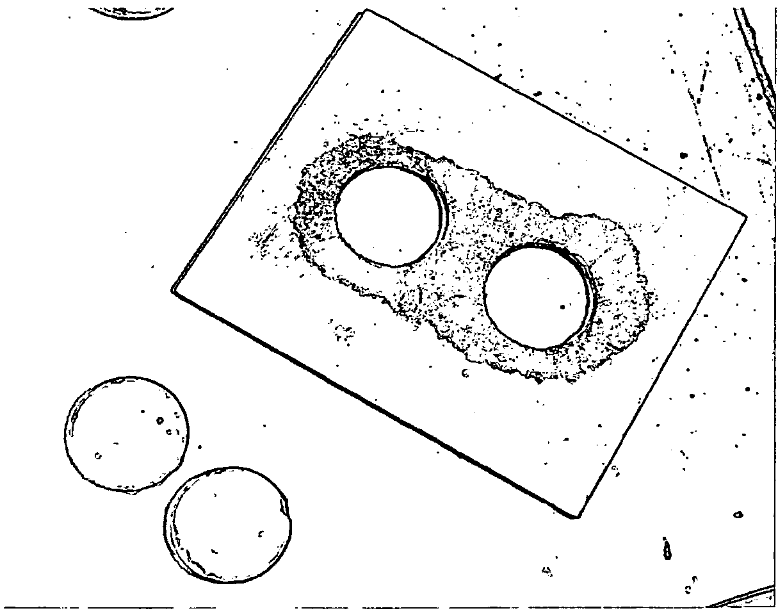

Figure 8

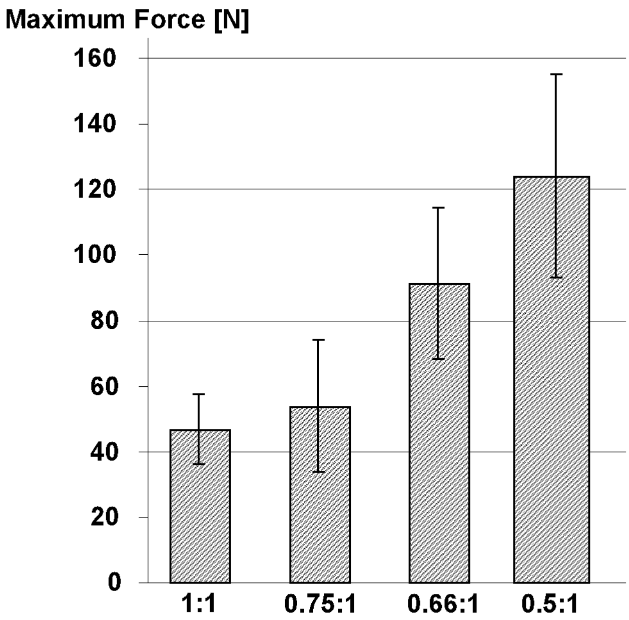


Figure 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 02064653 A
- US 3624032 A
- US 3932343 A


### Littérature non-brevet citée dans la description


- **AFLAL et al.** *Appl. Polym. Sci.,* 2009, vol. 113, 2191
- **LEHN, J.M.** *Progress Polym. Sci.,* 2005, vol. 30, 814-831
- **SKENE W.G. ; LEHN, J.M.** *P.N.A.S.,* 2004, vol. 22, 8270-8275
- **CHEN X. et al.** *Science,* 2002, vol. 295, 1698-1702
- **J.O.OUTWATER ; D.G. GERRY.** *J.Adhesion,* 1969, vol. 1, 290-298
- Epoxy Resins, Chemistry and Technology. Marcel Dekker, 1988
- **P.J. FLORY.** Principles of Polymer Chemistry. Cornell University Press, 1953
- Epoxy Polymer. R.J.J. Williams, Wiley-VCH, 2010
- Chimie industrielle. 1999